(19) **Europäisches Patentamt**

**European Patent Office**

**Office européen des brevets**

(11) **EP 4 694 294 A1**

(12) **EUROPEAN PATENT APPLICATION**
published in accordance with Art. 153(4) EPC

(43) Date of publication:
**11.02.2026 Bulletin 2026/07**

(21) Application number: **24784294.1**

(22) Date of filing: **02.04.2024**

(51) International Patent Classification (IPC):
**H04W 24/08** (2009.01)     **G06N 20/00** (2019.01)

(52) Cooperative Patent Classification (CPC):
**G06N 20/00; H04W 24/02; H04W 24/06; H04W 24/08**

(86) International application number:
**PCT/CN2024/085589**

(87) International publication number:
**WO 2024/208211 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **07.04.2023 CN 202310370580**

(71) Applicant: **Vivo Mobile Communication Co., Ltd. Dongguan, Guangdong 523863 (CN)**

(72) Inventor: **SUN, Bule Dongguan, Guangdong 523863 (CN)**

(74) Representative: **Shieldmark P.O. Box 90471 2509 LL The Hague (NL)**

(54) **CSI PREDICTION PERFORMANCE MONITORING METHOD, APPARATUS, TERMINAL AND NETWORK SIDE DEVICE**

(57) This application discloses a method and apparatus for monitoring CSI prediction performance, a terminal, and a network-side device, and pertains to the field of communication technologies. The method for monitoring CSI prediction performance in embodiments of this application includes: acquiring, by a terminal based on monitoring configuration information, first channel information corresponding to CSI prediction channel information; where the first channel information is used for determining the CSI prediction performance of an AI model; and the monitoring configuration information includes at least one of the following: information about at least one AI model identifier, the AI model identifier being used to indicate the AI model; monitoring window-related information, used to indicate a monitoring window for monitoring AI-based CSI prediction performance; monitoring trigger-related information, used to indicate a condition for triggering AI-based CSI prediction performance monitoring; and monitoring CSI-RS configuration information, used for measuring CSI-RS configuration information of the first channel information.

A terminal acquires, based on monitoring configuration information, first channel information corresponding to channel state information prediction channel information, where the channel state information prediction channel information is prediction information output by an artificial intelligence model for channel state information prediction, and the first channel information is used for determining the channel state information prediction performance of the artificial intelligence model; where the monitoring configuration information includes at least one of the following: information about at least one artificial intelligence model identifier, the artificial intelligence model identifier being used to indicate the artificial intelligence model; monitoring window–related information, used to indicate a monitoring window for monitoring artificial intelligence-based channel state information prediction performance; monitoring trigger–related information, used to indicate a condition for triggering artificial intelligence-based channel state information prediction performance monitoring; and monitoring channel state information reference signal configuration information, used for measuring channel state information reference signal configuration information of the first channel information

601

FIG. 6

**Description**

**CROSS-REFERENCE TO RELATED APPLICATIONS**

This application claims priority to Chinese Patent Application No. 202310370580.2, filed on April 7, 2023 and entitled "METHOD AND APPARATUS FOR MONITORING CSI PREDICTION PERFORMANCE, TERMINAL, AND NETWORK-SIDE DEVICE," which is incorporated herein by reference in its entirety.

**TECHNICAL FIELD**

This application pertains to the field of communication technologies, and specifically, to a method and apparatus for monitoring CSI prediction performance, a terminal, and a network-side device.

**BACKGROUND**

At present, channel state information (Channel State Information, CSI) prediction based on artificial intelligence (Artificial Intelligence, AI) can achieve high prediction accuracy, but its generalization capability to different channel environments is limited. When there is a large difference between the inference environment and the training environment of the AI, the performance of AI-based CSI prediction deteriorates significantly, resulting in a mismatch.

Therefore, how to monitor the actual inference performance of AI-based CSI prediction is a technical problem that urgently needs to be addressed.

**SUMMARY**

Embodiments of this application provide a method and apparatus for monitoring CSI prediction performance, a terminal, and a network-side device, capable of addressing the issue of monitoring the actual inference performance of AI-based CSI prediction.

According to a first aspect, a method for monitoring CSI prediction performance is provided and executed by a terminal. The method includes:

acquiring, by the terminal based on monitoring configuration information, first channel information corresponding to CSI prediction channel information, where the CSI prediction channel information is prediction information output by an artificial intelligence AI model for CSI prediction, and the first channel information is used for determining the CSI prediction performance of the AI model; where

the monitoring configuration information includes at least one of the following:

information about at least one AI model identifier, the AI model identifier being used to indicate the AI model;
monitoring window-related information, used to indicate a monitoring window for monitoring AI-based CSI prediction performance;
monitoring trigger-related information, used to indicate a condition for triggering AI-based CSI prediction performance monitoring; and
monitoring CSI-RS configuration information, used for measuring CSI-RS configuration information of the first channel information.

According to a second aspect, a method for monitoring CSI prediction performance is provided and executed by a network-side device. The method includes:

transmitting, by a network-side device, monitoring configuration information to a terminal; where the monitoring configuration information is used to acquire first channel information corresponding to CSI prediction channel information, the CSI prediction channel information is prediction information output by an artificial intelligence (AI) model for CSI prediction, and the first channel information is used for determining the CSI prediction performance of the AI model; where

the monitoring configuration information includes at least one of the following:

information about at least one AI model identifier, the AI model identifier being used to indicate the AI model;
monitoring window-related information, used to indicate a monitoring window for monitoring AI-based CSI prediction performance;
monitoring trigger-related information, used to indicate a condition for triggering AI-based CSI prediction performance monitoring; and
monitoring CSI-RS configuration information, used for measuring CSI-RS configuration information of the first channel information.

According to a third aspect, an apparatus for monitoring CSI prediction performance is provided, including:

an acquisition module configured to acquire, based on monitoring configuration information, first channel information corresponding to CSI prediction channel information, where the CSI prediction channel information is prediction information output by an artificial intelligence AI model for CSI prediction, and the first channel information is used for determining the CSI prediction performance of the AI model; where
the monitoring configuration information includes at least one of the following:

information about at least one artificial intelligence AI model identifier, the AI model identifier being used to indicate the AI model;
monitoring window-related information, used to indicate a monitoring window for monitoring AI-based CSI prediction performance;
monitoring trigger-related information, used to indicate a condition for triggering AI-based CSI prediction performance monitoring; and
monitoring CSI-RS configuration information, used for measuring CSI-RS configuration information of the first channel information.

According to a fourth aspect, an apparatus for monitoring CSI prediction performance is provided, including:

a first transmitting module configured to transmit monitoring configuration information to a terminal, where the monitoring configuration information is used to acquire first channel information corresponding to CSI prediction channel information, the CSI prediction channel information is prediction information output by an artificial intelligence AI model for CSI prediction, and the first channel information is used for determining the CSI prediction performance of the AI model; where
the monitoring configuration information includes at least one of the following:

information about at least one artificial intelligence AI model identifier, the AI model identifier being used to indicate the AI model;
monitoring window-related information, used to indicate a monitoring window for monitoring AI-based CSI prediction performance;
monitoring trigger-related information, used to indicate a condition for triggering AI-based CSI prediction performance monitoring; and
monitoring CSI-RS configuration information, used for measuring CSI-RS configuration information of the first channel information.

According to a fifth aspect, a terminal is provided. The terminal includes a processor and a memory, where the memory stores a program or instruction capable of running on the processor, and when the program or instruction is executed by the processor, the steps of the method according to the first aspect are implemented.

According to a sixth aspect, a terminal is provided, including a processor and a communication interface, where the processor is configured to acquire, based on monitoring configuration information, first channel information corresponding to CSI prediction channel information; the CSI prediction channel information is prediction information output by an artificial intelligence AI model for CSI prediction, and the first channel information is used for determining the CSI prediction performance of the AI model; where the monitoring configuration information includes at least one of the following: information about at least one artificial intelligence AI model identifier, the AI model identifier being used to indicate the AI model; monitoring window-related information, used to indicate a monitoring window for monitoring AI-based CSI prediction performance; monitoring trigger-related information, used to indicate a condition for triggering AI-based CSI prediction performance monitoring; and monitoring CSI-RS configuration information, used for measuring CSI-RS configuration information of the first channel information.

According to a seventh aspect, a network-side device is provided. The network-side device includes a processor and a memory, where the memory stores a program or instruction capable of running on the processor, and when the program or instruction is executed by the processor, the steps of the method according to the first aspect are implemented.

According to an eighth aspect, a network-side device is provided, including a processor and a communication interface, where the communication interface is configured to transmit monitoring configuration information to a terminal, the monitoring configuration information is used to acquire first channel information corresponding to CSI prediction channel information; the CSI prediction channel information is prediction information output by an artificial intelligence AI model for CSI prediction, and the first channel information is used for determining the CSI prediction performance of the AI model; where the monitoring configuration information includes at least one of the following: information about at least one artificial intelligence AI model identifier, the AI model identifier being used to indicate the AI model; monitoring window-related information, used to indicate a monitoring window for monitoring AI-based CSI prediction performance; monitoring trigger-related information, used to indicate a condition for triggering AI-based CSI prediction performance monitoring; and monitoring CSI-RS configuration information, used for measuring CSI-RS configuration information of the first channel information.

According to a ninth aspect, a readable storage medium is provided, the readable storage medium storing programs or instructions, the programs or instructions, when executed by a processor, implementing the steps of the method according to the first aspect, or implementing the steps of the method according to the second aspect.

According to a tenth aspect, a wireless communication system is provided, including: a terminal and a network-side device, the terminal being configured to execute the steps of the method according to the first aspect, and the network-side device being configured to execute the steps of the method according to the second aspect.

According to an eleventh aspect, a chip is provided, the chip including a processor and a communication interface, the communication interface being coupled to the processor, the processor being configured to run programs or instructions to implement the method according to the first aspect, or to implement the method according to the second aspect.

According to a twelfth aspect, a computer program/program product is provided, the computer program/program product being stored in a storage medium, the program/program product being executed by at least one processor to implement the method according to the first aspect, or to implement the steps of the method according to the second aspect.

In the embodiments of this application, the terminal can acquire, based on monitoring configuration information, first channel information corresponding to CSI prediction channel information output by an AI model, and monitor the CSI prediction performance of the AI model based on the first channel information, and evaluate the CSI prediction performance of the AI model based on a monitoring result of the CSI prediction performance.

## BRIEF DESCRIPTION OF DRAWINGS

FIG. 1 is a block diagram of a wireless communication system to which embodiments of this application are applicable;
FIG. 2 is a schematic structural diagram of a neural network according to embodiments of this application;
FIG. 3 is a schematic diagram of a computational logic of a neuron according to embodiments of this application;
FIG. 4 is a schematic diagram of AI-based CSI prediction according to embodiments of this application;
FIG. 5 is a schematic diagram of system performance corresponding to CSIs predicted by an AI model at different future time points according to embodiments of this application;
FIG. 6 is a first flowchart of a method for monitoring CSI prediction performance according to embodiments of this application;
FIG. 7 is a second flowchart of a method for monitoring CSI prediction performance according to embodiments of this application;
FIG. 8 is a flowchart of a network-side device monitoring CSI prediction performance according to embodiments of this application;
FIG. 9 is a flowchart of a terminal monitoring CSI prediction performance according to embodiments of this application;
FIG. 10 is a first schematic structural diagrams of an apparatus for monitoring CSI prediction performance according to embodiments of this application;
FIG. 11 is a second schematic structural diagram of an apparatus for monitoring CSI prediction performance according to embodiments of this application;
FIG. 12 is a schematic diagram of a communication device according to embodiments of this application;
FIG. 13 is a schematic diagram of a hardware structure of a terminal according to embodiments of this application; and
FIG. 14 is a schematic diagram of a network-side device according to embodiments of this application.

## DESCRIPTION OF EMBODIMENTS

The following clearly describes technical solutions in embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this application are used to distinguish between similar objects instead of describing a specific order or sequence. It should be understood that the terms used in this way can be interchanged under appropriate circumstances, so that the embodiments of this application can be implemented in an order other than those illustrated or described here, and the objects distinguished by "first" and "second" are usually of the same type, not limiting the number of objects. For example, there may be one or a plurality of first objects. In addition, "or" in this application indicates at least one of the connected objects. For example, "A or B" covers three scenarios: scenario one: including A but not B; scenario two: including B but not A; scenario three: including both A and B. The character "/" generally indicates an "or" relationship between the associated objects.

The term "indication" in this application may be either a direct indication (or explicit indication) or an indirect indication (or implicit indication). A direct indication may mean that a transmitting side explicitly informs a receiving side of specific information, an operation to be performed, a requested result, or the like in a transmitted indication. An indirect indication may mean that the receiving side, based on the indication transmitted by the transmitting side, determines corresponding information or makes a judgment and determines an operation to be performed or a requested result based on the judgment result.

It is worth noting that the technologies described in the embodiments of this application are not limited to Long Term Evolution (LTE)/LTE-Advanced (LTE-A) systems but may also be used in other wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technologies described herein may be used for the systems and radio technologies mentioned above as well as other systems and radio technologies. In the following descriptions, a new radio (New Radio, NR) system is described for an illustration purpose, and NR terms are used in most of the following descriptions, although these technologies may also be applied to systems other than NR systems, for example, the 6th generation (6th Generation, 6G) communication system.

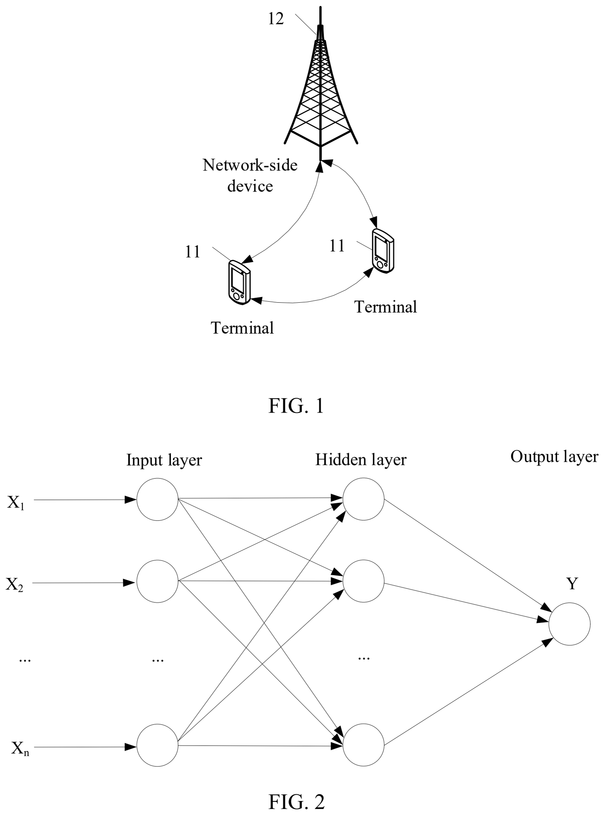

FIG. 1 is a block diagram of a wireless communication system to which embodiments of this application may be applicable. The wireless communication system includes a terminal 11 and a network-side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR), virtual reality (Virtual Reality, VR) device, a robot, a wearable device (Wearable Device), a flight vehicle (flight vehicle), vehicle user equipment (Vehicle User Equipment, VUE), shipboard equipment, or pedestrian user equipment (Pedestrian User Equipment, PUE), a smart appliance (a household device with a wireless communication function, such as a refrigerator, a television, a washing machine, or furniture), a game console, a personal computer (Personal Computer, PC), a teller machine, or a self-service machine. The wearable device includes smartwatches, smart bands, smart earphones, smart glasses, smart jewelry (smart bangles, smart bracelets, smart rings, smart necklaces, smart foot bangles, and smart anklets), smart wristbands, and smart clothing. The vehicle user equipment may also be referred to as vehicle terminal, vehicle controller, vehicle module, vehicle component, vehicle chip, vehicle unit, or the like. It should be noted that the specific type of the terminal 11 is not limited in the embodiments of this application. The network-side device 12 may include an access network device or a core network device, where the access network device may also be referred to as a radio access network (RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as Node B (Node B, NB), evolved Node B (Evolved Node B, eNB), the next generation Node B (next generation Node B, gNB), New Radio Node B (New Radio Node B, NR Node B), access point, relay base station (Relay Base Station, RBS), serving base station (Serving Base Station, SBS), base transceiver station (Base Transceiver Station, BTS), radio base station, radio transceiver, basic service set (Basic Service Set, BSS), extended service set (Extended Service Set, ESS), home Node B (home Node B, HNB), home evolved Node B (home evolved Node B), transmission reception point (Transmission Reception Point, TRP) or some other suitable term in the field. As long as the same technical effects are achieved, the base station is not limited to any specific technical terminology. It should be noted that in the embodiments of this application, only the base station in the NR system is taken as an example for introduction, and the specific type of the base station is not limited.

The core network device may include, but is not limited to, at least one of the following: core network node, core network function, mobility management entity (MME), access and mobility management function (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized network configuration, CNC), network repository function (Network Repository Function, NRF), network exposure function (Network Exposure Function, NEF), local NEF (Local NEF or L-NEF), binding support function (Binding Support Function, BSF), and application function (Application Function, AF). It should be noted that in the embodiments of this application, only the core network device in the NR system is taken as an example for introduction, and the specific type of the core network device is not limited.

To facilitate a clearer understanding of the technical solutions provided in the embodiments of this application, some relevant background knowledge is introduced below.

AI is currently widely applied in various fields. AI modules can be implemented in various ways, such as neural networks, decision trees, support vector machines, and Bayesian classifiers. This application takes neural networks as an example for description but does not limit the specific type of AI module.

FIG. 2 is a schematic structural diagram of a neural network according to embodiments of this application. As shown in FIG. 2, a neural network includes an input layer, a hidden layer, and an output layer; where $x_1$, $x_2$, and $X_n$ are inputs to the neural network, and $Y$ is an output of the neural network.

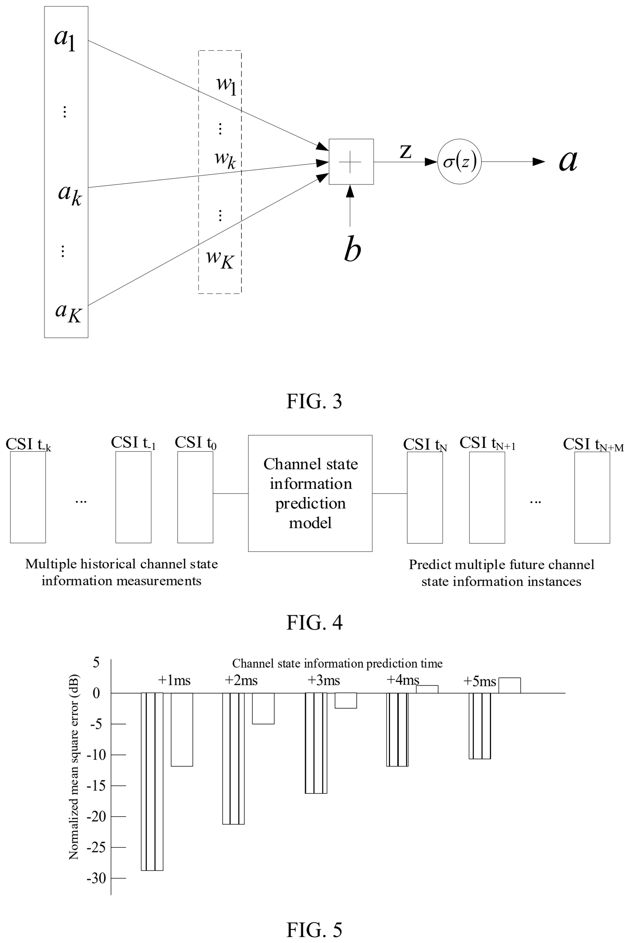

The neural network is composed of neurons. FIG. 3 is a schematic diagram of a computational logic of a neuron according to embodiments of this application. As shown in FIG. 3, $a_1$, $a_k$, $a_K$ are inputs, $w_1$, $w_k$, $w_K$ are weights (multiplicative coefficients), b is a bias (additive coefficient), and $\sigma(z)$ is an activation function. Common activation functions include Sigmoid, tanh, linear rectified functions (also referred to as rectified linear unit (Rectified Linear unit, ReLU), and the like, and can be expressed by the following formula (1):

$$z = a_1 w_1 + ... + a_k w_k + ... + a_K w_K + b \qquad (1)$$

Parameters of a neural network are optimized through gradient optimization algorithms. Gradient optimization algorithms are a class of algorithms that minimize or maximize a target function (sometimes called a loss function), which is often a mathematical combination of model parameters and data.

For example, given data X and its corresponding label Y, we build a neural network model f(.), and with the model, a predicted output f(x) can be obtained based on input X, and a difference between a predicted value and a true value (f(x)-Y) can be calculated, which is the loss function. The goal is to find appropriate $w$, b to minimize the value of the loss function. A smaller loss value indicates that the model is closer to the actual situation.

Currently common optimization algorithms are basically based on an error back propagation (error Back Propagation, BP) algorithm. The basic idea of the BP algorithm is that the learning process consists of two stages: forward propagation of signal and backward propagation of error. During forward propagation, input samples are passed from the input layer, processed layer by layer through the hidden layers, and then transmitted to the output layer. If an actual output of the output layer does not match an expected output, the process enters the backward propagation of error stage. The backward propagation of error refers to propagating the output error backward in some form layer by layer through the hidden layers back to the input layer, and distributing the error to all units in each layer, thereby obtaining the error signal for each layer unit, which serves as the basis for correcting the weights of the units. This process of adjusting the weights of the layers through forward propagation of signal and backward propagation of error is performed repeatedly. The process of continuously adjusting weights is the learning and training process of the network. This process continues until the error output by the network is reduced to an acceptable level or until a preset number of learning iterations is reached.

Generally, selected AI algorithms and used AI models may vary depending on the type of problem to be solved. A main method to improve 5G network performance using AI is to use neural network-based algorithms and AI models to enhance or replace existing algorithms or processing modules. In specific scenarios, neural network-based algorithms and AI models can achieve better performance than deterministic algorithms. Commonly used neural networks include deep neural networks, convolutional neural networks, and recurrent neural networks. With existing AI tools, it is possible to build, train, and validate neural networks.

Replacing modules in existing systems with AI/machine learning (Machine Learning, ML) methods can effectively improve system performance.

FIG. 4 is a schematic diagram of AI-based CSI prediction according to embodiments of this application. As shown in FIG. 4, historical CSIs, that is, CSI $t_0$, CSI $t_{-1}$, ..., CSI $t_{-k}$, are input into a CSI prediction model, and the AI model analyzes time-domain variation characteristics of a channel to output future CSIs, that is, CSI $t_N$, CSI $t_{N+1}$, ..., CSI $t_{N+M}$.

FIG. 5 is a schematic diagram of system performance corresponding to CSIs predicted by an AI model at different future time points according to embodiments of this application. As shown in FIG. 5, the horizontal axis represents the time of predicted CSI, and the vertical axis represents the normalized mean square error (Normalized mean square error, NMSE), which characterizes the system performance. The vertically hatched bar graphs represent NMSEs corresponding to one-step-ahead CSIs predicted using the AI model, while the white bar graphs represent NMSEs corresponding to future CSI prediction without using the AI model. the AI model predicting CSI one step ahead; the white bar graph indicates the NMSEs corresponding to future CSIs predicted without using AI model.

It can be seen from FIG. 5 that AI-based CSI prediction provides significant performance gains compared to schemes without prediction. In addition, the achievable prediction accuracy varies depending on the specific future time points being predicted.

Although AI-based CSI prediction can achieve the above gains, it also has certain drawbacks, the most significant being the poor generalization of AI-based schemes. When there is a large difference between the inference environment and the training environment of the AI, the performance of AI-based CSI prediction deteriorates significantly, resulting in a mismatch. For example, a CSI prediction AI model trained with channel data from a terminal moving at 30 km/h would perform poorly in a terminal mobility scenario of 60 km/h.

Therefore, it is necessary to monitor the actual inference performance of AI-based CSI prediction and trigger a series of adjustment measures based on a monitoring result.

At present, the 3rd generation partnership project (Generation Partnership Project, 3GPP) has not yet conducted research on monitoring CSI prediction based on AI, and the existing New Radio (NR) protocols cannot directly support it. To this end, embodiments of this application provide a feasible method and apparatus for monitoring CSI prediction performance, a terminal, and a network-side device, involving alignment of monitoring configuration information (transmitted from a network side to a terminal), data collection and reporting of a monitoring label (that is, predicted ground-truth CSI), definition of monitoring metrics, reporting of monitoring metrics, and the like. The process of monitoring CSI prediction performance is described under two scenarios: network-side monitoring and terminal-side monitoring.

In the embodiments of this application, the terminal may acquire, based on monitoring configuration information, first channel information corresponding to CSI prediction channel information output by an AI model, and monitor the CSI prediction performance of the AI model based on the first channel information, and evaluate the CSI prediction performance of the AI model based on a monitoring result of the CSI prediction performance.

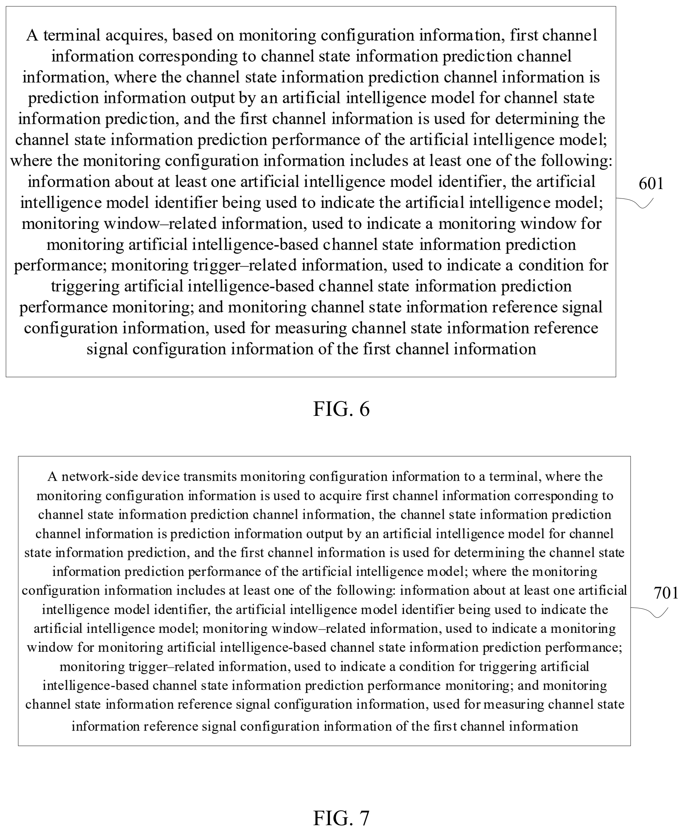

FIG. 6 is a first flowchart of a method for monitoring CSI prediction performance according to embodiments of this application. As shown in FIG. 6, the method includes step 601:

step 601: A terminal acquires, based on monitoring configuration information, first channel information corresponding to CSI prediction channel information, where the CSI prediction channel information is prediction information output by an artificial intelligence AI model for CSI prediction, and the first channel information is used for determining the CSI prediction performance of the AI model; where the monitoring configuration information includes at least one of the following: information about at least one AI model identifier, the AI model identifier being used to indicate the AI model; monitoring window-related information, used to indicate a monitoring window for monitoring AI-based CSI prediction performance; monitoring trigger-related information, used to indicate a condition for triggering AI-based CSI prediction performance monitoring; and monitoring CSI-RS configuration information, used for measuring CSI-RS configuration information of the first channel information.

It should be noted that this embodiments of this application can be applied to scenarios where AI predicts CSI, and the terminal includes, but is not limited to, the types of terminal 11 listed above, and the network-side device includes, but is not limited to, the types of network-side device 12 listed above. This is not limited in this embodiment of this application.

This embodiment of this application can be applied to communication systems such as 5.5G or 6G equipped with wireless AI capabilities. To monitor the CSI prediction performance of an AI model, in this embodiment, the terminal needs to acquire, based on monitoring configuration information, first channel information corresponding to the predicted channel information output by the AI model for CSI prediction, where the first channel information is ground-truth CSI channel information corresponding to the predicted channel information.

It should be noted that the monitoring configuration information is used to instruct the terminal to perform AI-based CSI prediction performance monitoring; the monitoring channel state information reference signal (Channel State Information Reference Signal, CSI-RS) configuration information in the monitoring configuration information is used for measuring CSI-RS configuration information of the first channel information.

In practical applications, if a prediction time of an AI model (that is, a time point at which a predicted channel is located) coincides with a future time point of the CSI-RS currently used for channel measurement, the monitoring CSI-RS directly reuses the CSI-RS currently used for channel measurement, that is, no additional configuration is required, and this can be set as a default configuration. For example, the current CSI-RS periodicity for channel measurement is 4 ms, and the predicted CSI corresponds to CSI at 4 ms into the future.

If the prediction time of the AI model does not coincide with a future time point of the CSI-RS currently used for channel measurement, a new CSI-RS different from the CSI-RS currently used for channel measurement needs to be configured, and the network-side device needs to transmit this new CSI-RS configuration information to the terminal. For example, the current CSI-RS periodicity for channel measurement is 4 ms, and the predicted CSI corresponds to CSI at 3 ms into the future.

In this embodiment provided in this application, the CSI prediction performance of the AI model may be monitored at the terminal side or the network-side device, with specific manners as follows:

manner 1: monitoring the CSI prediction performance of the AI model at the terminal side, where specifically, the network-side device transmits monitoring configuration information to the terminal, and the terminal acquires the first channel information corresponding to the CSI prediction channel information output by the AI model based on the monitoring configuration information; the terminal may calculate, based on the first channel information, a CSI prediction monitoring result (that is, CSI prediction performance of the AI model); and further, the terminal reports the CSI prediction monitoring result to the network-side device, and the network-side device may evaluate quality of the current CSI prediction of the AI model and make an adjustment decision based on an evaluation result; and

manner 2: monitoring the CSI prediction performance of the AI model at the network-side device, where specifically, the monitoring the CSI prediction performance of the AI model at the network-side device includes the following steps:

transmitting, by the network-side device, monitoring configuration information to the terminal, where the terminal acquires the first channel information corresponding to the CSI prediction channel information output by the AI model based on the monitoring configuration information, and after acquiring the first channel information, the terminal reports the first channel information to the network-side device; calculating, by the network-side device, a CSI prediction monitoring result (that is, CSI prediction performance of the AI model) based on the first channel information; and further, evaluating, by the network-side device, quality of the current CSI prediction of the AI model and make an adjustment decision based on an evaluation result.

In the method for monitoring CSI prediction performance provided in this embodiment of this application, the terminal can acquire, based on monitoring configuration information, first channel information corresponding to the CSI prediction channel information output by the AI model, monitor the CSI prediction performance of the AI model based on the first channel information, and evaluate the CSI prediction performance of the AI model based on a monitoring result of the CSI prediction performance.

Optionally, before acquiring the first channel information based on the monitoring configuration information, the terminal also needs to receive the monitoring configuration information from the network-side device, the monitoring configuration information being used to instruct the terminal to perform AI-based CSI prediction performance monitoring.

Optionally, the information about an AI model identifier includes at least one of the following:

(a) AI functionality identifier ID (functionality ID);
(b) AI model ID;
(c) AI model physical ID;
(d) AI model logical ID;
(e) AI model global ID; and
(f) AI model local ID.

It should be noted that the role of the information about an AI model identifier is to locate a position for monitoring; and that multiple AI model identifiers indicate the need to run multiple AI models in parallel for monitoring. For example, in making an AI model selection decision, multiple AI models need to be monitored.

Optionally, the monitoring window-related information includes at least one of the following:

(a) duration of monitoring;
(b) number of monitoring samples, where
specifically, the number of monitoring samples refers to the number of samples involved in the monitoring process; and
(c) time-domain interval between monitoring samples, where
specifically, the time-domain interval between monitoring samples is greater than or equal to a current CSI-RS periodicity, and by default, it is the same as the current CSI-RS periodicity.

In the above monitoring window-related information, several optional values are defined for each type of information by protocol, and when the network-side device transmits the monitoring configuration information to the terminal, it is necessary to select one from the predefined optional values for configuration.

Optionally, the monitoring trigger-related information includes at least one of the following:

(a) a periodicity value for periodic triggering; and
(b) first event description information for event triggering;

The first event description information includes any one of the following:

1. speed change threshold: when the speed change value exceeds a preset threshold, monitoring of the performance of CSI prediction by the AI model is triggered;

2. signal to noise ratio (Signal to Noise ratio, SNR) change threshold: when the SNR exceeds a preset threshold, monitoring of the performance of CSI prediction by the AI model is triggered;

3. wireless environment change event: for example, a change from line of sight (Line of Sight, LOS) to non line of sight (Non Line of Sight NLOS), or from outdoor to indoor; and

4. communication system performance threshold: for example, when a threshold for throughput, spectral efficiency, transmission rate, signal-to- interference-plus-noise ratio (Signal Interference plus Noise Ratio, SINR), block error rate (Block Error Rate, BLER), bit error rate (Bit Error Rate, BER), or the like exceeds a preset threshold, monitoring of the performance of CSI prediction by the AI model is triggered.

Optionally, the terminal receives reporting information from the network-side device, the reporting information being used to indicate configuration information related to reporting.

It should be noted that the network-side device may transmit the reporting information and the monitoring configuration information together to the terminal, or transmit the reporting information and the monitoring configuration information separately to the terminal.

Optionally, the reporting information includes at least one of the following:

(a) trigger information for reporting of a monitoring result, including a periodicity value for periodic reporting or second event description information for event-triggered reporting; where

specifically, for example, a monitoring result is not reported in the second event description information by default, and the monitoring result is reported only when a channel environment, terminal state, monitoring metric or the like meets a specific condition;

(b) report content, including a monitoring metric value or the first channel information; where

it should be noted that in case of monitoring the CSI prediction performance of the AI model at the terminal side, the report content includes a monitoring metric value, where the monitoring metric value is used to characterize the CSI prediction performance of the AI model; and in case of monitoring the CSI prediction performance of the AI model at the network-side device, the report content includes the first channel information;

(c) resource information for carrying report content, used to carry the report content; where

specifically, the resource information for carrying report content indicates the time-frequency resources on which the report content is reported; and

(d) a report content format, including format information of a monitoring metric value or format information of the first channel information, where

specifically, the protocol may predefine several formats for report content, and the network-side device selects one from the predefined formats to configure for the terminal.

In the above embodiments, the network-side device transmits monitoring configuration information to the terminal, enabling the terminal to acquire, based on the monitoring configuration information, the first channel information corresponding to the CSI prediction channel information output by the AI model, and monitor the CSI prediction performance of the AI model based on the first channel information.

In one possible implementation of this embodiment, the terminal receives the monitoring configuration information transmitted by the network-side device based on a first manner. That is, the network-side device may transmit the monitoring configuration information to the terminal based on the first manner, where the first manner includes at least one of the following information or signaling:

(a) media access control (Media Access Control, MAC) control element (Control Element, CE);

(b) radio resource control (Radio Resource Control, RRC) message;

(c) non-access stratum (Non-Access Stratum, NAS) message;

(d) management orchestration message;

(e) user plane data;

(f) downlink control information (Downlink Control Information, DCI);

(g) system information block (System Information Block, SIB);

(h) physical downlink control channel (Physical Downlink Control Channel, PDCCH) layer 1 signaling;

(i) information carried on physical downlink shared channel (Physical Downlink Shared Channel, PDSCH);

(j) MSG 2 information of physical random access channel (Physical Random Access Channel, PRACH);

(k) MSG 4 information of PRACH; and

(l) MSG B information of PRACH.

After the terminal acquires the first channel information corresponding to the CSI prediction channel information based on the monitoring configuration information, the terminal or the network-side device monitors the CSI prediction performance of the AI model.

When the network-side device monitors the CSI prediction performance of the AI model, the terminal needs to report the first channel information to the network-side device in at least one of the following manners:

manner 1: reporting, by the terminal based on the reporting information, both the CSI prediction channel information and the first channel information to the network-side device; and

manner 2: transmitting, by the terminal, the first channel information to the network-side device at a next CSI reporting occasion (occasion) or an N-th CSI reporting occasion (occasion) based on the reporting information after transmitting the CSI prediction channel information to the network-side device, where the first channel information carries label information, the label information being used for determining the CSI prediction channel information corresponding to the first channel information, and N is an integer greater than 1.

It should be noted that the format of the first channel information needs to be consistent with the format of the CSI prediction channel information.

Optionally, the label information includes at least one of the following:

(a) channel information attribute information, used to indicate that the first channel information is ground-truth channel information, where

specifically, the channel information attribute information indicates that the first channel information is true value information (not ordinary channel information) and needs to be distinguished from ordinary channel information; and

(b) a lag value of a CSI reporting occasion, used to characterize a time gap between a CSI reporting occasion for the first channel information and a CSI reporting occasion for the CSI prediction channel information, where

specifically, the lag value of the CSI reporting occasion is used to assist in determining the CSI prediction channel information corresponding to the first channel information. Through the lag value of the CSI reporting occasion, the network side may select paired CSI prediction channel information and first channel information and calculate a CSI prediction monitoring metric.

For example, if the CSI prediction channel information is reported at occasion N, and the corresponding ground-truth CSI channel information (that is, the first channel information) is reported at occasion N+1, the lag value is set to 1; and if the corresponding ground-truth CSI channel information is reported at occasion N+3, the lag value is set to 3.

Optionally, the CSI prediction channel information or the first channel information is reported based on uplink control information (Uplink Control Information, UCI).

Optionally, in case of monitoring the CSI prediction performance of the AI model at the terminal side, the terminal needs to calculate a monitoring metric and then report the monitoring metric to the network-side device, where the monitoring metric is statistically derived based on information within the monitoring window. Specifically, this can be achieved through the following steps [1]-[2]:

step [1]: determining, by the terminal, a monitoring metric value based on monitoring information within the monitoring window, where the monitoring information includes at least one of the CSI prediction channel information, the first channel information, and communication system performance, the monitoring metric value being used to characterize the CSI prediction performance of the AI model; and

step [2]: transmitting, by the terminal, the monitoring metric value to the network-side device based on the reporting information.

Optionally, the monitoring metric value includes at least one of the following.

(a) first information, used to characterize error information between the CSI prediction channel information and the first channel information, where

optionally, the first information includes at least one of the following: mean error (mean error); mean square error (mean square error); normalized mean square error (normalized mean square error); mean absolute error (mean absolute error); cross-entropy loss (Cross-entropy loss); and root mean square error (Root Mean Square Error).

It should be noted that the above statistical quantities are obtained by performing statistics on all CSI prediction channel information and first channel information within the monitoring window.

(b) a quantitative scoring metric corresponding to the first information, which refers to a quantitative scoring metric derived by further mapping of the first information.

For example, all possible values for the first information are divided into multiple intervals in descending order, with each interval corresponding to a score or level. A score or level corresponding to an interval into which the calculated first information falls is reported. At least one level may be provided, for example, a level indicating that the AI model cannot work or the performance of the AI model is unacceptable. By default, the first information is not reported, and once the first information is reported, it indicates that the AI model cannot work or the performance of the AI model is unacceptable.

In an example with two levels, one level indicates that the AI model can work or the performance of the AI model is acceptable, and another level indicates that the AI model cannot work or the performance of the AI model is unacceptable.

(c) second information, used to characterize an average value of accuracy information between the CSI prediction channel information and the first channel information, where

optionally, the second information includes at least one of the following: accuracy; similarity; cosine similarity; correlation; and correlation coefficient.

The above average value of accuracy information is obtained by performing statistics on all CSI prediction channel information and first channel information within the monitoring window.

(d) a quantitative scoring metric corresponding to the second information, which refers to a quantitative scoring metric derived by further mapping of the second information.

(e) third information, used to characterize communication system performance, where

optionally, according to the method for monitoring CSI prediction performance according to claim 12, the third information includes at least one of the following:

throughput; spectrum efficiency; signal-to-interference-plus-noise ratio (SINR); SNR; bit error rate; block error rate; packet loss rate; transmission rate (uplink/downlink); and peak rate (uplink/downlink). The above statistical quantities are obtained within the monitoring window.

(f) a quantitative scoring metric corresponding to the third information, which refers to a quantitative scoring metric derived by further mapping of the third information.

(g) fourth information, used to characterize a maximum or minimum value of a first metric between the CSI prediction channel information and the first channel information within the monitoring window.

(h) fifth information, used to characterize a number of times that a single measurement result or an average of multiple measurement results of a first metric between the CSI prediction channel information and the first channel information within the monitoring window exceeds or falls below a given threshold, where

the first metric includes at least one of the following: error, modulus of error, squared modulus of error, norm of error, accuracy, similarity, cosine similarity, correlation, and correlation coefficient.

Optionally, the transmitting, by the terminal, the monitoring metric value to the network-side device can be achieved specifically through the following step:

transmitting, by the terminal, the monitoring metric value to the network-side device based on a second manner, where the second manner includes at least one of the following information or signaling:

(a) physical uplink control channel (Physical Uplink Control Channel, PUCCH) layer 1 signaling;
(b) MSG 1 information of PRACH;
(c) MSG 3 information of PRACH;
(d) MSG A information of PRACH; and
(e) information of physical uplink shared channel (Physical Uplink Shared Channel, PUSCH).

It should be noted that a specific AI model has its applicable condition information. The initial applicable condition information of an AI model is generally broad, and based on the monitoring result of the AI model, the applicable condition information of the AI model can be updated, where the applicable condition is bound to an AI model ID, and the applicable condition may be a type of assistance information (assistance information), bound to data collection and the AI model ID.

Therefore, in case of monitoring the CSI prediction performance of the AI model at the network-side device, after the terminal reports the first channel information to the network-side device, the network-side device also needs to transmit the applicable condition information of the AI model to the terminal to enable the terminal to configure or update the AI model. Specifically, this can be achieved through the following steps [1]-[2]:

step [1]: receiving, by the terminal, the AI model identifier and first applicable condition information from the network-side device; and
step [2]: configuring or updating, by the terminal, a second applicable condition of the AI model based on the AI model identifier and the first applicable condition information, the second applicable condition including at least one of the following: channel condition; scenario condition; movement speed condition; and serving cell range or cell list condition.

That is, the network-side device updates the applicable condition information of a specific AI model based on the first channel information, and then transmits the AI model ID and the first applicable condition information to the terminal side, where a binding relationship between the AI model ID and the first applicable condition information should be ensured. The terminal receives the first applicable condition information of the AI model, retrieves a corresponding model through the AI model ID, and configures or updates the second applicable condition of the AI model.

Optionally, in one possible implementation of the embodiments of this application, the first applicable condition information is carried in the model configuration information from the network-side device.

That is, the first applicable condition information can be transmitted directly from the network-side device to the terminal, or may be delivered together with an AI model configuration by the network-side device. For example, when the network side transmits a new AI model to the terminal, in addition to the new AI model, the first applicable condition information of the new AI model needs to be delivered together with the AI model configuration to the terminal.

Optionally, the AI model identifier may be carried in the model configuration information from the network-side device, or the network-side device may transmit the AI model identifier to the terminal separately. This is not limited in this application.

In case of monitoring the CSI prediction performance of the AI model by the terminal, the terminal configuring or updating the AI model can be achieved specifically through the following steps [1]-[3]:

step [1]: determining, by the terminal, a second applicable condition of the AI model based on the monitoring metric value;

step [2]: transmitting, by the terminal, the AI model identifier and second applicable condition information to the network-side device, the second applicable condition information being used to indicate the second applicable condition; and

step [3]: receiving, by the terminal, the AI model identifier and first applicable condition information from the network-side device, the first applicable condition information being used to indicate the first applicable condition.

In this embodiment, the terminal transmits the AI model ID and second applicable condition information to the network-side device based on the monitoring metric value. The network side transmits the AI model ID and first applicable condition information to the terminal based on the second applicable condition information reported by multiple terminals, where a binding relationship between the AI model ID and the first applicable condition information should be ensured.

Optionally, the first applicable condition or the second applicable condition includes at least one of the following:

(a) channel condition, such as SNR, SINR, and RSRP;
(b) scenario condition, such as indoor or outdoor;
(c) movement speed condition; and
(d) serving cell range or cell list condition.

Optionally, the terminal receives the AI model identifier and the first applicable condition information from the network-side device, which can be achieved through the following step:

receiving, by the terminal, the AI model identifier and the first applicable condition information transmitted by the network-side device based on a first manner.

where the first manner includes at least one of the following information or signaling:

(a) MAC CE;
(b) RRC message;
(c) NAS message;
(d) management orchestration message;
(e) user plane data;
(f) DCI information;
(g) SIB;
(h) PDCCH layer 1 signaling;
(i) information carried on PDSCH;
(j) MSG 2 information of PRACH;
(k) MSG 4 information of PRACH; and

(I) MSG B information of PRACH.

Optionally, the transmitting, by the terminal, the AI model identifier and second applicable condition information to the network-side device can be achieved specifically in any of the following manners:

manner 1: transmitting, by the terminal, the AI model identifier and terminal capability information to the network-side device; the terminal capability information including the second applicable condition information. and
manner 2: transmitting, by the terminal, the AI model identifier and the second applicable condition information to the network-side device based on a second manner, where
the second manner includes at least one of the following information or signaling:

(a) PUCCH layer 1 signaling;
(b) MSG 1 information of PRACH;
(c) MSG 3 information of PRACH;
(d) MSG A information of PRACH; and
(e) information of PUSCH.

FIG. 7 is a second flowchart of a method for monitoring CSI prediction performance according to embodiments of this application. As shown in FIG. 7, the method includes step 701:
step 701: A network-side device transmits monitoring configuration information to a terminal, where the monitoring configuration information is used to acquire first channel information corresponding to CSI prediction channel information, the CSI prediction channel information is prediction information output by an artificial intelligence AI model for CSI prediction, and the first channel information is used for determining the CSI prediction performance of the AI model; where the monitoring configuration information includes at least one of the following: information about at least one AI model identifier, the AI model identifier being used to indicate the AI model; monitoring window-related information, used to indicate a monitoring window for monitoring AI-based CSI prediction performance; monitoring trigger-related information, used to indicate a condition for triggering AI-based CSI prediction performance monitoring; and monitoring CSI-RS configuration information, used for measuring CSI-RS configuration information of the first channel information.
It should be noted that this embodiment of this application can be applied to scenarios where AI predicts CSI, and the terminal includes, but is not limited to, the types of terminal 11 listed above, and the network-side device includes, but is not limited to, the types of network-side device 12 listed above. This is not limited in this embodiment of this application.
This embodiment of this application can be applied to communication systems such as 5.5G or 6G equipped with wireless AI capabilities. To monitor the CSI prediction performance of an AI model, in this embodiment, the network-side device needs to transmit monitoring configuration information to the terminal, enabling the terminal to acquire, based on the monitoring configuration information, first channel information corresponding to the predicted channel information output by the AI model for CSI prediction, where the first channel information is ground-truth CSI channel information corresponding to the predicted channel information.
In one possible implementation of this embodiment, the CSI prediction performance of the AI model may be monitored at the terminal side.
Specifically, the terminal may calculate, based on the first channel information, the CSI prediction monitoring result (i.e., the CSI prediction performance of the AI model; further, the terminal reports the CSI prediction monitoring result to the network-side device, and the network-side device can evaluate the quality of the AI model's current CSI prediction and make adjustment decisions based on the evaluation result.
In another possible implementation of this embodiment, the CSI prediction performance of the AI model may be monitored at the network-side device.
Specifically, after acquiring the first channel information, the terminal reports the first channel information to the network-side device, and the network-side device can calculate a CSI prediction monitoring result (that is, CSI prediction performance of the AI model) based on the first channel information. Further, the network-side device can evaluate quality of the current CSI prediction of the AI model and make an adjustment decision based on an evaluation result.
In the method for monitoring CSI prediction performance provided in this embodiment of this application, the network-side device transmits monitoring configuration information to the terminal, enabling the terminal to acquire, based on the monitoring configuration information, first channel information corresponding to the CSI prediction channel information output by the AI model, monitor the CSI prediction performance of the AI model based on the first channel information, and evaluate the CSI prediction performance of the AI model based on a monitoring result of the CSI prediction performance.
Optionally, the transmitting, by the network-side device, monitoring configuration information to a terminal can be achieved through the following step:

transmitting, by the network-side device, the monitoring configuration information to the terminal based on a first manner, where
the first manner includes at least one of the following information or signaling:

> media access control MAC control element CE;
> radio resource control RRC message;
> non-access stratum NAS message;
> management orchestration message;
> user plane data;
> downlink control information DCI;
> system information block SIB;
> physical downlink control channel PDCCH layer 1 signaling;
> information carried on physical downlink shared channel PDSCH;
> MSG 2 information of physical random access channel PRACH;
> MSG 4 information of PRACH; and
> MSG B information of PRACH.

Optionally, the information about an AI model identifier includes at least one of the following:

> (a) AI functionality identifier ID;
> (b) AI model ID;
> (c) AI model physical ID;
> (d) AI model logical ID;
> (e) AI model global ID; and
> (f) AI model local ID.

Optionally, the monitoring window-related information includes at least one of the following:

> (a) duration of monitoring;
> (b) number of monitoring samples; and
> (c) time-domain interval between monitoring samples.

Optionally, the monitoring trigger-related information includes at least one of the following:

> (a) a periodicity value for periodic triggering; and
> (b) first event description information for event triggering, including any one of speed change threshold, signal to noise ratio (SNR) change threshold, wireless environment identification change event, and communication system performance threshold.

Optionally, the network-side device transmits reporting information to the terminal, the reporting information being used to indicate configuration information related to reporting.
It should be noted that the network-side device may transmit the reporting information and the monitoring configuration information together to the terminal, or transmit the reporting information and the monitoring configuration information separately to the terminal.
Optionally, the reporting information includes at least one of the following:

> (a) trigger information for reporting of a monitoring result, including a periodicity value for periodic reporting or second event description information for event-triggered reporting;
> (b) report content, including a monitoring metric value or the first channel information;
> (c) resource information for carrying report content, used to carry the report content; and
> (d) a report content format, including format information of a monitoring metric value or format information of the first channel information.

After the terminal acquires the first channel information corresponding to the CSI prediction channel information based on the monitoring configuration information, the terminal or the network-side device monitors the CSI prediction performance of the AI model.
When the network-side device monitors the CSI prediction performance of the AI model, the network-side device needs to receive the first channel information from the terminal in at least one of the following manners:

manner 1: receiving, by the network-side device, both the CSI prediction channel information and the first channel information reported by the terminal based on the reporting information; and

manner 2: receiving, by the network-side device, the first channel information transmitted by the terminal at a next CSI receiving occasion or an N-th CSI receiving occasion based on the reporting information after receiving the CSI prediction channel information transmitted by the terminal, where the first channel information carries label information, the label information being used for determining the CSI prediction channel information corresponding to the first channel information, and N is an integer greater than 1.

It should be noted that the format of the first channel information needs to be consistent with the format of the CSI prediction channel information.

Optionally, the label information includes at least one of the following:

(a) channel information attribute information, used to indicate that the first channel information is true CSI channel information; and

(b) a lag value of a CSI reporting occasion, used to characterize a time gap between a CSI reporting occasion for the first channel information and a CSI reporting occasion for the CSI prediction channel information.

Optionally, the CSI prediction channel information or the first channel information is reported by the terminal to the network-side device based on uplink control information UCI.

Optionally, in case of monitoring the CSI prediction performance of the AI model at the terminal side, the terminal needs to calculate a monitoring metric and then report the monitoring metric to the network-side device. This can be achieved specifically through the following step:

receiving, by the network-side device, a monitoring metric value transmitted by the terminal based on the reporting information, the monitoring metric value being used to characterize the CSI prediction performance of the AI model.

Optionally, the monitoring metric value includes at least one of the following:

(a) first information, used to characterize error information between the CSI prediction channel information and the first channel information, where optionally, the first information includes at least one of the following: mean error; mean square error; normalized mean square error; mean absolute error; cross-entropy loss; and root mean square error;

(b) a quantitative scoring metric corresponding to the first information;

(c) second information, used to characterize an average value of accuracy information between the CSI prediction channel information and the first channel information, where

optionally, the second information includes at least one of the following: accuracy; similarity; cosine similarity; correlation; and correlation coefficient;

(d) a quantitative scoring metric corresponding to the second information;

(e) third information, used to characterize communication system performance, where

optionally, the third information includes at least one of the following:

throughput; spectrum efficiency; signal-to-interference-plus-noise ratio (SINR); SNR; bit error rate; block error rate; packet loss rate; transmission rate; and peak rate;

(f) a quantitative scoring metric corresponding to the third information;

(g) fourth information, used to characterize the maximum or minimum value of a first metric between the CSI prediction channel information and the first channel information within the monitoring window; and

(h) fifth information, used to characterize a number of times that a single measurement result or an average of multiple measurement results of a first metric between the CSI prediction channel information and the first channel information within the monitoring window exceeds or falls below a given threshold, where

the first metric includes at least one of the following: error, modulus of error, squared modulus of error, norm of error, accuracy, similarity, cosine similarity, correlation, and correlation coefficient.

Optionally, the receiving, by the network-side device, a monitoring metric value transmitted by the terminal can be achieved specifically through the following step:

receiving, by the network-side device, the monitoring metric value transmitted by the terminal based on a second manner, where

the second manner includes at least one of the following information or signaling:

physical uplink control channel PUCCH layer 1 signaling;

MSG 1 information of PRACH;

MSG 3 information of PRACH;

MSG A information of PRACH; and
information of physical uplink shared channel PUSCH.

In a case of monitoring the CSI prediction performance of the AI model at the network-side device, after the network-side device receives the first channel information from the terminal, the network-side device also needs to transmit the applicable condition information of the AI model to the terminal to enable the terminal to configure or update the AI model. This can be achieved specifically through the following step:

transmitting, by the network-side device, the AI model identifier and first applicable condition information to the terminal, the first applicable condition information being used for the terminal to configure or update a second applicable condition of the AI model; where
the second applicable condition includes at least one of the following: channel condition; scenario condition; movement speed condition; and serving cell range or cell list condition.

Optionally, the first applicable condition information is carried in the model configuration information transmitted by the network-side device to the terminal.
In case of monitoring the CSI prediction performance of the AI model at the terminal side, the terminal configuring or updating the AI model can be achieved specifically through the following steps [1]-[2]:

step [1]: receiving, by the network-side device, the AI model identifier and second applicable condition information from the terminal, the second applicable condition information being used to indicate the second applicable condition; and
step [2]: transmitting, by the network-side device, the AI model identifier and first applicable condition information to the terminal, the first applicable condition information being used to indicate the first applicable condition.

Optionally, the first applicable condition or the second applicable condition includes at least one of the following:

(a) channel condition;
(b) scenario condition;
(c) movement speed condition; and
(d) serving cell range or cell list condition.

Optionally, the transmitting, by the network-side device, the AI model identifier and first applicable condition information to the terminal can be achieved specifically through the following step:
transmitting, by the network-side device, the AI model identifier and the first applicable condition information to the terminal based on a first manner.
Optionally, the first manner includes at least one of the following information or signaling:

(a) MAC CE;
(b) RRC message;
(c) NAS message;
(d) management orchestration message;
(e) user plane data;
(f) DCI information;
(g) SIB;
(h) PDCCH layer 1 signaling;
(i) information carried on PDSCH;
(j) MSG 2 information of PRACH;
(k) MSG 4 information of PRACH; and
(l) MSG B information of PRACH.

Optionally, the receiving, by the network-side device, the AI model identifier and the second applicable condition information from the terminal can be achieved specifically in any of the following manners:

manner 1: receiving, by the network-side device, the AI model identifier and terminal capability information from the terminal, the terminal capability information including the second applicable condition information; and
manner 2: receiving, by the network-side device, the AI model identifier and the second applicable condition information transmitted by the terminal based on a second manner.

Optionally, the second manner includes at least one of the following information or signaling:

(a) PUCCH layer 1 signaling;
(b) MSG 1 information of PRACH;
(c) MSG 3 information of PRACH;
(d) MSG A information of PRACH; and
(e) information of PUSCH.

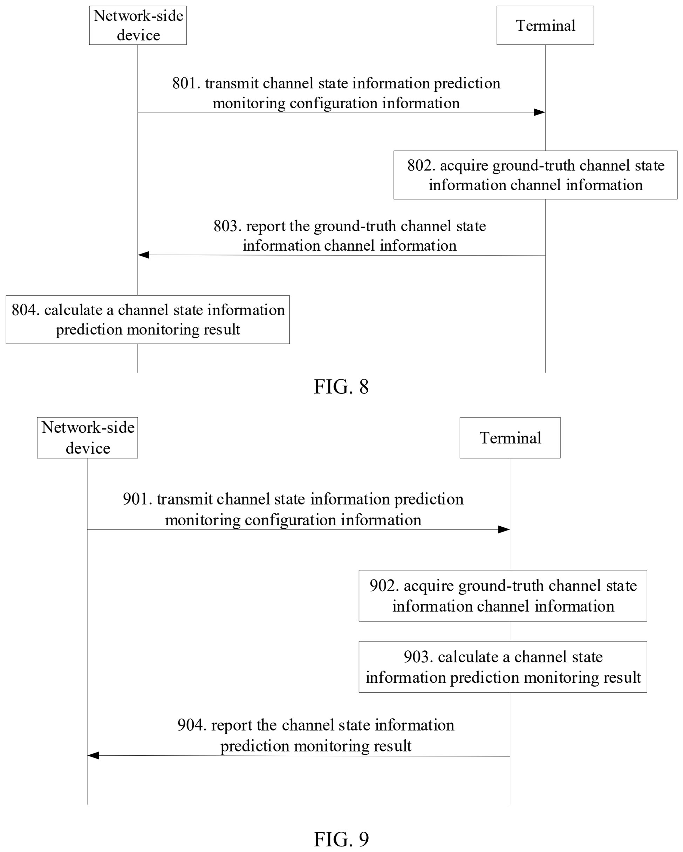

FIG. 8 is a flowchart of a network-side device monitoring CSI prediction performance according to embodiments of this application. As shown in FIG. 8, the method includes steps 801-804:

step 801: transmitting, by a network-side device, CSI prediction monitoring configuration information to a terminal;
step 802: acquiring, by the terminal based on the CSI prediction monitoring configuration information, ground-truth CSI channel information corresponding to the CSI prediction channel information;
step 803: reporting, by the terminal, the ground-truth CSI channel information to the network-side device; and
step 804: calculating, by the network-side device, a CSI prediction monitoring result.

In this embodiment of this application, the network-side device transmits CSI prediction monitoring configuration information to the terminal, enabling the terminal to acquire ground-truth CSI channel information corresponding to the CSI prediction channel information output by the AI model, and report the ground-truth CSI channel information to the network-side device, so that the network-side device can monitor the CSI prediction performance of the AI model. Based on a monitoring result of the CSI prediction performance, the network-side device can evaluate the CSI prediction performance of the AI model.

FIG. 9 is a flowchart of a terminal monitoring CSI prediction performance according to embodiments of this application. As shown in FIG. 9, the method includes steps 901-904:

step 901: transmitting, by a network-side device, CSI prediction monitoring configuration information to a terminal;
step 902: measuring, by the terminal based on the CSI prediction monitoring configuration information, ground-truth CSI channel information corresponding to the CSI prediction channel information;
step 903: calculating, by the terminal, a CSI prediction monitoring result; and
step 904: reporting, by the terminal, the CSI prediction monitoring result to the network-side device.

In this embodiment of this application, the network-side device transmits CSI prediction monitoring configuration information to the terminal, enabling the terminal to acquire ground-truth CSI channel information corresponding to the CSI prediction channel information output by the AI model. The terminal can calculate a CSI prediction monitoring result based on the ground-truth CSI channel information, thereby implementing the monitoring of CSI prediction performance of the AI model. The terminal reports the CSI prediction monitoring result to the network-side device, enabling the network-side device to evaluate the CSI prediction performance of the AI model based on the CSI prediction monitoring result.

The method for monitoring CSI prediction performance provided in this embodiment of this application may be executed by an apparatus for monitoring CSI prediction performance. In the embodiments of this application, an apparatus for monitoring CSI prediction performance executing the method for monitoring CSI prediction performance is taken as an example to illustrate the apparatus for monitoring CSI prediction performance provided in the embodiments of this application.

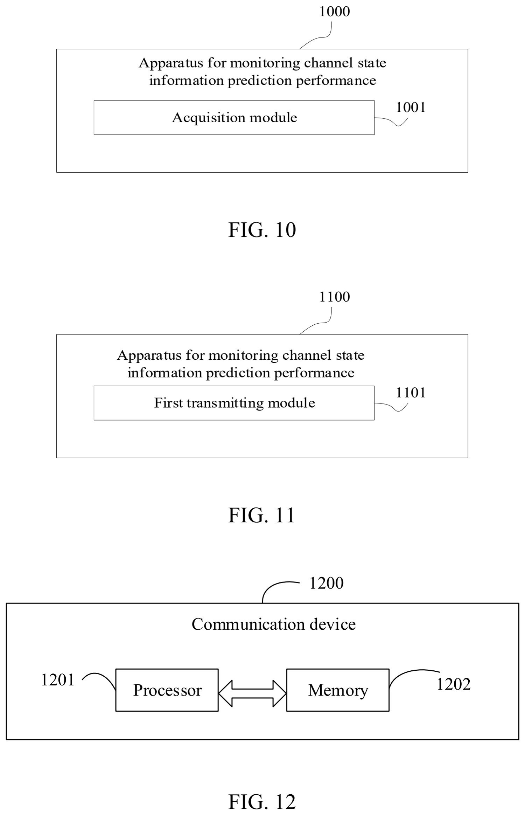

FIG. 10 is a first schematic structural diagram of an apparatus for monitoring CSI prediction performance according to embodiments of this application. As shown in FIG. 10, the apparatus for monitoring CSI prediction performance 1000, applied to a terminal, includes:

an acquisition module 1001 configured to acquire, based on monitoring configuration information, first channel information corresponding to CSI prediction channel information, where the CSI prediction channel information is prediction information output by an AI model for CSI prediction, and the first channel information is used for determining the CSI prediction performance of the AI model; where
the monitoring configuration information includes at least one of the following:

information about at least one artificial intelligence AI model identifier, the AI model identifier being used to indicate the AI model;
monitoring window-related information, used to indicate a monitoring window for monitoring AI-based CSI prediction performance;
monitoring trigger-related information, used to indicate a condition for triggering AI-based CSI prediction performance monitoring; and
monitoring CSI-RS configuration information, used for measuring CSI-RS configuration information of the first channel information.

In the apparatus for monitoring CSI prediction performance provided in this embodiment of this application, based on the monitoring configuration information, the first channel information corresponding to the CSI prediction channel information output by the AI model can be acquired; based on the first channel information, the CSI prediction performance of the AI model may be monitored; and based on a monitoring result of the CSI prediction performance, the CSI prediction performance of the AI model can be evaluated.

Optionally, the apparatus further includes:
a first receiving module configured to receive the monitoring configuration information from the network-side device.

Optionally, the first receiving module is further configured to:

receive the monitoring configuration information transmitted by the network-side device based on a first manner; where
the first manner includes at least one of the following information or signaling:

media access control MAC control element CE;
radio resource control RRC message;
non-access stratum NAS message;
management orchestration message;
user plane data;
downlink control information DCI information;
system information block SIB;
physical downlink control channel PDCCH layer 1 signaling;
information carried on physical downlink shared channel PDSCH;
MSG 2 information of physical random access channel PRACH;
MSG 4 information of PRACH; and
MSG B information of PRACH.

Optionally, the information about an AI model identifier includes at least one of the following:
AI functionality identifier ID; AI model ID; AI model physical ID; AI model logical ID; AI model global ID; and AI model local ID.

Optionally, the monitoring window-related information includes at least one of the following:

duration of monitoring;
number of monitoring samples; and
time-domain interval between monitoring samples.

Optionally, the monitoring trigger-related information includes at least one of the following:

a periodicity value for periodic triggering; and
first event description information for event triggering, including any one of speed change threshold, signal to noise ratio SNR change threshold, wireless environment identification change event, and communication system performance threshold.

Optionally, the apparatus further includes:
a second receiving module configured to receive reporting information from the network-side device, the reporting information being used to indicate configuration information related to reporting.

Optionally, the reporting information includes at least one of the following:

trigger information for reporting of a monitoring result, including a periodicity value for periodic reporting or second event description information for event-triggered reporting;
report content, including a monitoring metric value or the first channel information;
resource information for carrying report content, used to carry the report content; and
a report content format, including: format information of a monitoring metric value or format information of the first channel information.

Optionally, the apparatus further includes at least one of the following:

a reporting module configured to report both the CSI prediction channel information and the first channel information to the network-side device based on the reporting information; and

a second transmitting module configured to, after transmitting the CSI prediction channel information to the network-side device, transmit the first channel information to the network-side device at the next CSI reporting occasion or the N-th CSI reporting occasion based on the reporting information, where the first channel information carries label information, the label information being used for determining the CSI prediction channel information corresponding to the first channel information, and N is an integer greater than 1.

Optionally, the label information includes at least one of the following:

channel information attribute information, used to indicate that the first channel information is true CSI channel information; and

a lag value of a CSI reporting occasion, used to characterize a time gap between a CSI reporting occasion for the first channel information and a CSI reporting occasion for the CSI prediction channel information.

Optionally, the CSI prediction channel information or the first channel information is reported based on uplink control information UCI.

Optionally, the apparatus further includes:

a first determining module configured to determine a monitoring metric value based on monitoring information within the monitoring window, where the monitoring information includes at least one of the CSI prediction channel information, the first channel information, and communication system performance, the monitoring metric value being used to characterize the CSI prediction performance of the AI model; and

a third transmitting module configured to transmit the monitoring metric value to the network-side device based on the reporting information.

Optionally, the monitoring metric value includes at least one of the following:

first information, used to characterize error information between the CSI prediction channel information and the first channel information;

a quantitative scoring metric corresponding to the first information;

second information, used to characterize an average value of accuracy information between the CSI prediction channel information and the first channel information;

a quantitative scoring metric corresponding to the second information;

third information, used to characterize communication system performance;

a quantitative scoring metric corresponding to the third information;

fourth information, used to characterize a maximum or minimum value of a first metric between the CSI prediction channel information and the first channel information within the monitoring window; and

fifth information, used to characterize a number of times that a single measurement result or an average of multiple measurement results of a first metric between the CSI prediction channel information and the first channel information within the monitoring window exceeds or falls below a given threshold; where

the first metric includes at least one of the following: error, modulus of error, squared modulus of error, norm of error, accuracy, similarity, cosine similarity, correlation, and correlation coefficient.

Optionally, the first information includes at least one of the following: mean error; mean square error; normalized mean square error; mean absolute error; cross-entropy loss; and root mean square error.

Optionally, the second information includes at least one of the following: accuracy; similarity; cosine similarity; correlation; and correlation coefficient.

Optionally, the third information includes at least one of the following:
throughput; spectrum efficiency; signal-to-interference-plus-noise ratio SINR; SNR; bit error rate; block error rate; packet loss rate; transmission rate; and peak rate.

Optionally, the third transmitting module is further configured to:

transmit the monitoring metric value to the network-side device based on a second manner; where
the second manner includes at least one of the following information or signaling:

physical uplink control channel PUCCH layer 1 signaling;
MSG 1 information of PRACH;
MSG 3 information of PRACH;
MSG A information of PRACH; and
information of physical uplink shared channel PUSCH.

Optionally, the apparatus further includes:

a third receiving module configured to receive the AI model identifier and first applicable condition information from the network-side device; and
a first configuration module configured to configure or update a second applicable condition of the AI model based on the AI model identifier and the first applicable condition information, the second applicable condition including at least one of the following: channel condition; scenario condition; movement speed condition; and serving cell range or cell list condition.

Optionally, the first applicable condition information is carried in the model configuration information from the network-side device.

Optionally, the apparatus further includes:

a second determining module configured to determine a second applicable condition of the AI model based on the monitoring metric value;
a fourth transmitting module configured to transmit the AI model identifier and second applicable condition information to the network-side device, the second applicable condition information being used to indicate the second applicable condition; and
a fourth receiving module configured to receive the AI model identifier and first applicable condition information from the network-side device, the first applicable condition information being used to indicate the first applicable condition.

Optionally, the first applicable condition or the second applicable condition includes at least one of the following: channel condition; scenario condition; movement speed condition; and serving cell range or cell list condition.

Optionally, the fourth receiving module is further configured to:

receive the AI model identifier and the first applicable condition information transmitted by the network-side device based on a first manner; where
the first manner includes at least one of the following information or signaling:

MAC CE;
RRC message;
NAS message;
management orchestration message;
user plane data;
DCI information;
SIB;
PDCCH layer 1 signaling;
information carried on PDSCH;
MSG 2 information of PRACH;
MSG 4 information of PRACH; and
MSG B information of PRACH.

Optionally, the fourth transmitting module is further configured to:
transmit the AI model identifier and terminal capability information to the network-side device; the terminal capability information including the second applicable condition information.

Optionally, the fourth transmitting module is further configured to:

transmit the AI model identifier and the second applicable condition information to the network-side device based on a second manner; where
the second manner includes at least one of the following information or signaling:

PUCCH layer 1 signaling;

MSG 1 information of PRACH;
MSG 3 information of PRACH;
MSG A information of PRACH; and
information of PUSCH.

FIG. 11 is another schematic structural diagram of an apparatus for monitoring CSI prediction performance according to embodiments of this application. As shown in FIG. 11, the apparatus for monitoring CSI prediction performance 1100, applied to network-side device, includes:

a first transmitting module 1101 configured to transmit monitoring configuration information to a terminal, where the monitoring configuration information is used to acquire first channel information corresponding to CSI prediction channel information, the CSI prediction channel information is prediction information output by an AI model for CSI prediction, and the first channel information is used for determining the CSI prediction performance of the AI model; where

the monitoring configuration information includes at least one of the following:

information about at least one artificial intelligence AI model identifier, the AI model identifier being used to indicate the AI model;
monitoring window-related information, used to indicate a monitoring window for monitoring AI-based CSI prediction performance;
monitoring trigger-related information, used to indicate a condition for triggering AI-based CSI prediction performance monitoring; and
monitoring CSI-RS configuration information, used for measuring CSI-RS configuration information of the first channel information.

In the apparatus for monitoring CSI prediction performance provided in this embodiment of this application, monitoring configuration information is transmitted to the terminal, enabling the terminal to acquire, based on the monitoring configuration information, first channel information corresponding to the CSI prediction channel information output by the AI model, monitor the CSI prediction performance of the AI model based on the first channel information, and evaluate the CSI prediction performance of the AI model based on a monitoring result of the CSI prediction performance.

Optionally, the first transmitting module 1101 is further configured to:

transmit the monitoring configuration information to the terminal based on a first manner; where
the first manner includes at least one of the following information or signaling:

media access control MAC control element CE;
radio resource control RRC message;
non-access stratum NAS message;
management orchestration message;
user plane data;
downlink control information DCI information;
system information block SIB;
physical downlink control channel PDCCH layer 1 signaling;
information carried on physical downlink shared channel PDSCH;
MSG 2 information of physical random access channel PRACH;
MSG 4 information of PRACH; and
MSG B information of PRACH.

Optionally, the information about an AI model identifier includes at least one of the following:
AI functionality identifier ID; AI model ID; AI model physical ID; AI model logical ID; AI model global ID; and AI model local ID.

Optionally, the monitoring window-related information includes at least one of the following:

duration of monitoring;
number of monitoring samples; and
time-domain interval between monitoring samples.

Optionally, the monitoring trigger-related information includes at least one of the following:

a periodicity value for periodic triggering; and
first event description information for event triggering, including any one of speed change threshold, signal to noise ratio SNR change threshold, wireless environment identification change event, and communication system performance threshold.

Optionally, the apparatus further includes:
a fifth transmitting module configured to transmit reporting information to the terminal, the reporting information being used to indicate configuration information related to reporting.

Optionally, the reporting information includes at least one of the following:

trigger information for reporting of a monitoring result, including a periodicity value for periodic reporting or second event description information for event-triggered reporting;
report content, including a monitoring metric value or the first channel information;
resource information for carrying report content, used to carry the report content; and
a report content format, including: format information of a monitoring metric value or format information of the first channel information.

Optionally, the apparatus further includes at least one of the following:

a fifth receiving module configured to receive both the CSI prediction channel information and the first channel information reported by the terminal based on the reporting information;
a sixth receiving module configured to, after receiving the CSI prediction channel information transmitted by the terminal, receive the first channel information transmitted by the terminal based on the reporting information at the next CSI receiving occasion or the N-th CSI receiving occasion, where the first channel information carries label information, the label information being used for determining the CSI prediction channel information corresponding to the first channel information, and N is an integer greater than 1.

Optionally, the label information includes at least one of the following:

channel information attribute information, used to indicate that the first channel information is true CSI channel information; and
a lag value of a CSI reporting occasion, used to characterize a time gap between a CSI reporting occasion for the first channel information and a CSI reporting occasion for the CSI prediction channel information.

Optionally, the CSI prediction channel information or the first channel information is reported by the terminal to the network-side device based on uplink control information UCI.

Optionally, the apparatus further includes:
a seventh receiving module configured to receive a monitoring metric value transmitted by the terminal based on the reporting information, the monitoring metric value being used to characterize the CSI prediction performance of the AI model.

Optionally, the monitoring metric value includes at least one of the following:

first information, used to characterize error information between the CSI prediction channel information and the first channel information;
a quantitative scoring metric corresponding to the first information;
second information, used to characterize an average value of accuracy information between the CSI prediction channel information and the first channel information;
a quantitative scoring metric corresponding to the second information;
third information, used to characterize communication system performance;
a quantitative scoring metric corresponding to the third information;
fourth information, used to characterize the maximum or minimum value of a first metric between the CSI prediction channel information and the first channel information within the monitoring window; and
fifth information, used to characterize a number of times that a single measurement result or an average of multiple measurement results of a first metric between the CSI prediction channel information and the first channel information within the monitoring window exceeds or falls below a given threshold; where
the first metric includes at least one of the following: error, modulus of error, squared modulus of error, norm of error, accuracy, similarity, cosine similarity, correlation, and correlation coefficient.

Optionally, the first information includes at least one of the following: mean error; mean square error; normalized mean square error; mean absolute error; cross-entropy loss; and root mean square error.

Optionally, the second information includes at least one of the following: accuracy; similarity; cosine similarity; correlation; and correlation coefficient.

Optionally, the third information includes at least one of the following:
throughput; spectrum efficiency; signal-to-interference-plus-noise ratio SINR; SNR; bit error rate; block error rate; packet loss rate; transmission rate; and peak rate.

Optionally, the seventh receiving module is further configured to:

receive the monitoring metric value transmitted by the terminal based on a second manner, where
the second manner includes at least one of the following information or signaling:

physical uplink control channel PUCCH layer 1 signaling;
MSG 1 information of PRACH;
MSG 3 information of PRACH;
MSG A information of PRACH; and
information of physical uplink shared channel PUSCH.

Optionally, the apparatus further includes:

a sixth transmitting module configured to transmit the AI model identifier and first applicable condition information to the terminal, the first applicable condition information being used for the terminal to configure or update the second applicable condition of the AI model; where
the second applicable condition includes at least one of the following: channel condition; scenario condition; movement speed condition; and serving cell range or cell list condition.

Optionally, the first applicable condition information is carried in the model configuration information transmitted by the network-side device to the terminal.

Optionally, the apparatus further includes:

an eighth receiving module configured to receive the AI model identifier and second applicable condition information from the terminal, the second applicable condition information being used to indicate the second applicable condition; and
a seventh transmitting module configured to transmit the AI model identifier and first applicable condition information to the terminal, the first applicable condition information being used to indicate the first applicable condition.

Optionally, the first applicable condition or the second applicable condition includes at least one of the following: channel condition; scenario condition; movement speed condition; and serving cell range or cell list condition.

Optionally, the seventh transmitting module is further configured to:

transmit the AI model identifier and the first applicable condition information to the terminal based on a first manner; where
the first manner includes at least one of the following information or signaling:

MAC CE;
RRC message;
NAS message;
management orchestration message;
user plane data;
DCI information;
SIB;
PDCCH layer 1 signaling;
information carried on PDSCH;
MSG 2 information of PRACH;
MSG 4 information of PRACH; and
MSG B information of PRACH.

Optionally, the eighth receiving module is further configured to:

receive the AI model identifier and terminal capability information from the terminal, the terminal capability information including the second applicable condition information.

Optionally, the eighth receiving module is further configured to:

receive the AI model identifier and the second applicable condition information transmitted by the terminal based on a second manner, where
the second manner includes at least one of the following information or signaling:

physical uplink control channel PUCCH layer 1 signaling;
MSG 1 information of PRACH;
MSG 3 information of PRACH;
MSG A information of PRACH; and
information of physical uplink shared channel PUSCH.

The apparatus for monitoring CSI prediction performance in this embodiment of this application may be an electronic device, such as an electronic device with an operating system, or a component in an electronic device, such as an integrated circuit or a chip. The electronic device may be a terminal or a device other than a terminal. By way of example, the terminal may include, but is not limited to, the types of terminal 11 listed above, and the other device may be a server, a network attached storage (Network Attached Storage, NAS), or the like. This is not specifically limited in this embodiment of this application.

The apparatus for monitoring CSI prediction performance provided in this embodiment of this application can implement processes implemented by the method embodiments of FIG. 6 to FIG. 9, with the same technical effects achieved. To avoid repetition, details are not repeated here.

As shown in FIG. 12, embodiments of this application further provide a communication device 1200, including a processor 1201 and a memory 1202. The memory 1202 stores a program or instruction capable of running on the processor 1201. For example, when the communication device 1200 is a terminal, the program or instruction, when executed by the processor 1201, implements the steps of the above embodiment of the method for monitoring CSI prediction performance shown in FIG. 6, with the same technical effects achieved. When the communication device 1200 is a network-side device, the program or instruction, when executed by the processor 1201, implements the steps of the above embodiment of the method for monitoring CSI prediction performance shown in FIG. 7, with the same technical effects achieved. To avoid repetition, details are not repeated here.

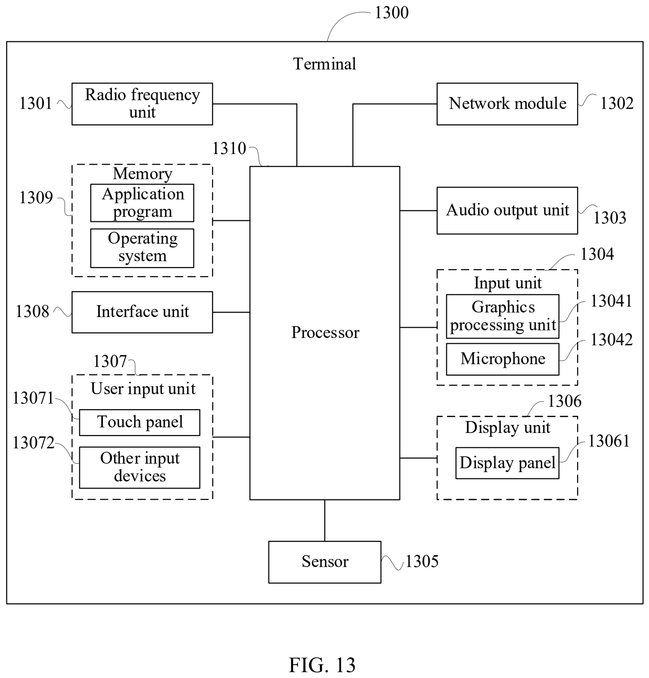

Embodiments of this application further provide a terminal, including a processor and a communication interface. The communication interface is coupled to the processor, and the processor is configured to run a program or instruction to implement the steps in the method embodiment shown in FIG. 6. This terminal embodiment corresponds to the terminal-side method embodiment described above, and all implementation processes and implementations in the above method embodiment are applicable to the terminal embodiment, with the same technical effects achieved. Specifically, FIG. 13 is a schematic diagram of a hardware structure of a terminal according to embodiments of this application.

The terminal 1300 includes, but is not limited to, at least some of the following components: a radio frequency unit 1301, a network module 1302, an audio output unit 1303, an input unit 1304, a sensor 1305, a display unit 1306, a user input unit 1307, an interface unit 1308, a memory 1309, and a processor 1310.

Those skilled in the art can understand that the terminal 1300 may also include a power source (such as a battery) for supplying power to each component, and the power source may be logically connected to the processor 1310 through a power management system to implement functions such as charging management, discharging management, and power consumption management through the power management system. The terminal structure shown in FIG. 13 does not constitute a limitation on the terminal, and the terminal may include more or fewer components than shown, or combine certain components, or have a different component arrangement, which is not repeated here.

It should be understood that, in the embodiments of this application, the input unit 1304 may include a graphics processing unit (Graphics Processing Unit, GPU) 13041 and a microphone 13042, the graphics processor 13041 processing image data of still pictures or videos obtained by an image capture device (such as a camera) in a video capture mode or an image capture mode. The display unit 1306 may include a display panel 13061, which may be configured in the form of a liquid crystal display, an organic light-emitting diode, etc. The user input unit 1307 includes at least one of a touch panel 13071 and other input devices 13072. The touch panel 13071, also known as a touchscreen, may include two parts: a touch detection device and a touch controller. Other input devices 13072 may include, but are not limited to, a physical keyboard, function keys (such as volume control keys, switch keys, etc.), a trackball, a mouse, and a joystick, which are not repeated here.

In this embodiment of this application, after receiving downlink data from the network-side device, the radio frequency unit 1301 may transmit the data to the processor 1310 for processing; and the radio frequency unit 1301 may transmit uplink data to the network-side device. Generally, the radio frequency unit 1301 includes, but is not limited to, an antenna, an amplifier, a transceiver, a coupler, a low-noise amplifier, and a duplexer.

The memory 1309 may be used to store software a program or instruction and various data. The memory 1309 may mainly include a first storage area for storing programs or instructions and a second storage area for storing data, where the first storage area may store an operating system, an application program or instructions required by at least one function (for example, a sound playback function, or an image playback function), and the like. In addition, the memory 1309 may include volatile memory or non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1309 in this embodiment of this application includes, but is not be limited to, these or any other applicable types of memories.

The processor 1310 may include one or more processing units. Optionally, the processor 1310 integrates an application processor and a modem processor. The application processor mainly processes operations related to the operating system, user interface, application program, or the like. The modem processor mainly processes wireless communication signals, for example, being a baseband processor. It can be understood that the above modem processor may be alternatively not integrated into the processor 1310.

Embodiments of this application further provide a network-side device, including a processor and a communication interface, where the communication interface is coupled to the processor, and the processor is configured to run a program or instruction to implement the steps in the method embodiment shown in FIG. 7. This network-side device embodiment corresponds to the above network-side device method embodiment, and all implementation process and implementation manner of the method embodiment are applicable to this network-side device embodiment, with the same technical effects achieved.

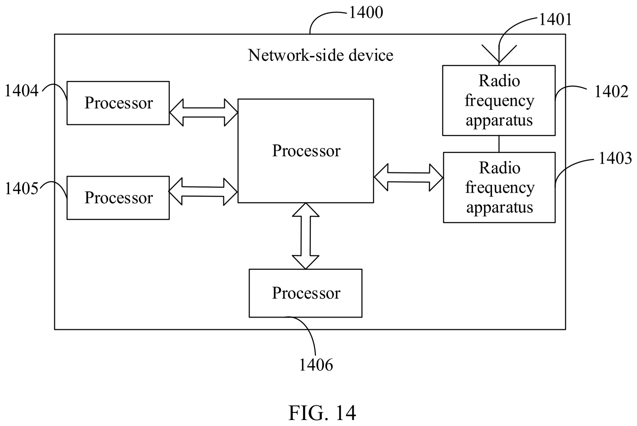

Specifically, embodiments of this application further provide a network-side device. As shown in FIG. 14, the network-side device 1400 includes an antenna 1401, a radio frequency apparatus 1402, a baseband apparatus 1403, a processor 1404, and a memory 1405. The antenna 1401 is connected to the radio frequency apparatus 1402. In uplink, the radio frequency apparatus 1402 receives information through the antenna 1401 and transmits the received information to the baseband apparatus 1403 for processing. In the downlink direction, the baseband apparatus 1403 processes the information to be transmitted and transmits it to the radio frequency apparatus 1402, which processes the received information and transmits it out through the antenna 1401.

The method executed by the network-side device in the above embodiments can be implemented in the baseband apparatus 1403. The baseband apparatus 1403 includes a baseband processor.

The baseband apparatus 1403 may, for example, include at least one baseband board, on which multiple chips are arranged. As shown in FIG. 14, one of the chips, for example, is a baseband processor, connected to the memory 1405 through a bus interface to call a program in the memory 1405 to execute the operations of the network device shown in the above method embodiments.

The network-side device may further include a network interface 1406, where the interface is, for example, a common public radio interface (Common Public Radio Interface, CPRI).

Specifically, the network-side device 1400 in the embodiments of the present invention further includes an instruction or program stored in the memory 1405 and capable of running on the processor 1404. The processor 1404 calls the instruction or program in the memory 1405 to execute the methods executed by the modules shown in FIG. 7, with the same technical effects achieved. To avoid repetition, details are not repeated here.

Embodiments of this application further provide a readable storage medium. A program or instruction is stored on the readable storage medium. When the program or instruction is executed by a processor, the processes in the embodiments of the methods for monitoring CSI prediction performance are implemented, with the same technical effects achieved. To avoid repetition, details are not repeated here.

The processor is the processor in the terminal described in the above embodiments. The readable storage medium includes a computer-readable storage medium, such as a computer readable storage medium, a computer read-only memory ROM, a random access memory RAM, a magnetic disk, or an optical disc. In some examples, the readable storage medium may be a non-transitory readable storage medium.

Embodiments of this application further provide a chip. The chip includes a processor and a communication interface, where the communication interface is coupled to the processor, and the processor is configured to run a program or instruction to implement the processes of the above embodiments of the methods for monitoring CSI prediction performance, with the same technical effects achieved. To avoid repetition, details are not repeated here.

It should be understood that the chip mentioned in the embodiments of this application may also be referred to as a system-level chip, a system chip, a chip system, or a system-on-chip chip, or the like.

Embodiments of this application further provide a computer program/program product, where the computer program/program product is stored in a storage medium, and the computer program/program product is executed by at least one processor to implement the processes of the above embodiments of the methods for monitoring CSI prediction performance, with the same technical effects achieved. To avoid repetition, details are not repeated here.

Embodiments of this application further provide a system for monitoring CSI prediction performance, including a terminal and a network-side device where the terminal is configured to execute the steps of the method for monitoring CSI prediction performance as described in FIG. 6, and the network-side device is configured to execute the steps of the method for monitoring CSI prediction performance as described in FIG. 7.

It should be noted that in this article, the terms "include", "comprise" or any other variants thereof are intended to cover non-exclusive inclusion, so that a process, method, article or device including a series of elements not only includes those elements, but also includes other elements not explicitly listed, or also includes elements inherent to such process, method, article or device. Without further restrictions, an element defined by the statement "including a..." does not exclude the existence of other identical elements in the process, method, article or device including the element. In addition, it should be pointed out that the scope of the methods and apparatuses in the embodiments of this application is not limited to performing functions in the order shown or discussed, but may also include performing functions in a basically simultaneous manner or in reverse order according to the functions involved, for example, the described method may be executed in an order different from the described order, and various steps may also be added, omitted or combined. In addition, features described with reference to certain examples may be combined in other examples.

By means of the description of the above embodiments, those skilled in the art can clearly understand that the methods in the above embodiments can be implemented by a computer software product with a necessary general hardware platform, and of course, may also be implemented by hardware. The computer software product is stored in a storage medium (such as ROM, RAM, magnetic disk, and optical disk), including several instructions to make a terminal or network-side device execute the methods described in various embodiments of this application.

The embodiments of this application have been described above in conjunction with the accompanying drawings, but this application is not limited to the above specific embodiments, which are merely illustrative rather than restrictive. Under the enlightenment of this application, those of ordinary skill in the art can make many forms of embodiments without departing from the purpose of this application and the scope protected by the claims, and these embodiments all fall within the protection of this application.

## Claims

1. A method for monitoring channel state information CSI prediction performance, comprising:

   acquiring, by a terminal based on monitoring configuration information, first channel information corresponding to CSI prediction channel information, wherein the CSI prediction channel information is prediction information output by an artificial intelligence AI model for CSI prediction, and the first channel information is used for determining the CSI prediction performance of the AI model; wherein
   the monitoring configuration information comprises at least one of the following:

   information about at least one AI model identifier, the AI model identifier being used to indicate the AI model;
   monitoring window-related information, used to indicate a monitoring window for monitoring AI-based CSI prediction performance;
   monitoring trigger-related information, used to indicate a condition for triggering AI-based CSI prediction performance monitoring; and
   monitoring CSI-RS configuration information, used for measuring CSI-RS configuration information of the first channel information.

2. The method for monitoring CSI prediction performance according to claim 1, wherein the method further comprises:
   receiving, by the terminal, the monitoring configuration information from a network-side device.

3. The method for monitoring CSI prediction performance according to claim 2, wherein the receiving, by the terminal, the monitoring configuration information from the network-side device comprises:

   receiving, by the terminal, the monitoring configuration information transmitted by the network-side device based on a first manner; wherein
   the first manner comprises at least one of the following information or signaling:

media access control MAC control element CE;
radio resource control RRC message;
non-access stratum NAS message;
management orchestration message;
user plane data;
downlink control information DCI;
system information block SIB;
physical downlink control channel PDCCH layer 1 signaling;
information carried on physical downlink shared channel PDSCH;
MSG 2 information of physical random access channel PRACH;
MSG 4 information of PRACH; and
MSG B information of PRACH.

4. The method for monitoring CSI prediction performance according to any one of claims 1 to 3, wherein the information about an AI model identifier comprises at least one of the following:
AI functionality identifier ID; AI model ID; AI model physical ID; AI model logical ID; AI model global ID; and AI model local ID.

5. The method for monitoring CSI prediction performance according to any one of claims 1 to 3, wherein the monitoring window-related information comprises at least one of the following:

duration of monitoring;
number of monitoring samples; and
time-domain interval between monitoring samples.

6. The method for monitoring CSI prediction performance according to any one of claims 1 to 3, wherein the monitoring trigger-related information comprises at least one of the following:

a periodicity value for periodic triggering; and
first event description information for event triggering, comprising any one of speed change threshold, signal to noise ratio SNR change threshold, wireless environment identification change event, and communication system performance threshold.

7. The method for monitoring CSI prediction performance according to any one of claims 1 to 6, wherein the method further comprises:
receiving, by the terminal, reporting information from the network-side device, the reporting information being used to indicate configuration information related to reporting.

8. The method for monitoring CSI prediction performance according to claim 7, wherein the reporting information comprises at least one of the following:

trigger information for reporting of a monitoring result, comprising a periodicity value for periodic reporting or second event description information for event triggering;
report content, comprising a monitoring metric value or the first channel information;
resource information for carrying report content, used to carry the report content; and
a report content format, comprising: format information of a monitoring metric value or format information of the first channel information.

9. The method for monitoring CSI prediction performance according to claim 7 or 8, wherein the method further comprises at least one of the following:

reporting, by the terminal based on the reporting information, both the CSI prediction channel information and the first channel information to the network-side device; and
transmitting, by the terminal, the first channel information to the network-side device at a next CSI reporting occasion or an N-th CSI reporting occasion based on the reporting information after transmitting the CSI prediction channel information to the network-side device, wherein the first channel information carries label information, the label information being used for determining the CSI prediction channel information corresponding to the first channel information, and N is an integer greater than 1.

10. The method for monitoring CSI prediction performance according to claim 9, wherein the label information comprises at least one of the following:

channel information attribute information, used to indicate that the first channel information is true CSI channel information; and
a lag value of a CSI reporting occasion, used to characterize a time gap between a CSI reporting occasion for the first channel information and a CSI reporting occasion for the CSI prediction channel information.

11. The method for monitoring CSI prediction performance according to claim 9 or 10, wherein the CSI prediction channel information or the first channel information is reported based on uplink control information UCI.

12. The method for monitoring CSI prediction performance according to claim 7 or 8, wherein the method further comprises:

determining, by the terminal based on monitoring information within the monitoring window, a monitoring metric value; wherein the monitoring information comprises at least one of the CSI prediction channel information, the first channel information, and communication system performance; the monitoring metric value being used to characterize the CSI prediction performance of the AI model; and
transmitting, by the terminal based on the reporting information, the monitoring metric value to the network-side device.

13. The method for monitoring CSI prediction performance according to claim 8 or 12, wherein the monitoring metric value comprises at least one of the following:

first information, used to characterize error information between the CSI prediction channel information and the first channel information;
a quantitative scoring metric corresponding to the first information;
second information, used to characterize an average value of accuracy information between the CSI prediction channel information and the first channel information;
a quantitative scoring metric corresponding to the second information;
third information, used to characterize communication system performance;
a quantitative scoring metric corresponding to the third information;
fourth information, used to characterize a maximum or minimum value of a first metric between the CSI prediction channel information and the first channel information within the monitoring window; and
fifth information, used to characterize a number of times that a single measurement result or an average of multiple measurement results of a first metric between the CSI prediction channel information and the first channel information within the monitoring window exceeds or falls below a given threshold; wherein
the first metric comprises at least one of the following: error, modulus of error, squared modulus of error, norm of error, accuracy, similarity, cosine similarity, correlation, and correlation coefficient.

14. The method for monitoring CSI prediction performance according to claim 13, wherein the first information comprises at least one of the following: mean error; mean square error; normalized mean square error; mean absolute error; cross-entropy loss; and root mean square error.

15. The method for monitoring CSI prediction performance according to claim 13, wherein the second information comprises at least one of the following: accuracy; similarity; cosine similarity; correlation; and correlation coefficient.

16. The method for monitoring CSI prediction performance according to claim 13, wherein the third information comprises at least one of the following:
throughput; spectrum efficiency; signal-to-interference-plus-noise ratio SINR; SNR; bit error rate; block error rate; packet loss rate; transmission rate; and peak rate.

17. The method for monitoring CSI prediction performance according to any one of claims 12 to 16, wherein the transmitting, by the terminal, the monitoring metric value to the network-side device comprises:

transmitting, by the terminal, the monitoring metric value to the network-side device based on a second manner; wherein the second manner comprises at least one of the following information or signaling:

physical uplink control channel PUCCH layer 1 signaling;
MSG 1 information of PRACH;
MSG 3 information of PRACH;
MSG A information of PRACH;
information of physical uplink shared channel PUSCH.

18. The method for monitoring CSI prediction performance according to any one of claims 12 to 17, wherein the method further comprises:

receiving, by the terminal, the AI model identifier and first applicable condition information from the network-side device; and
configuring or updating, by the terminal based on the AI model identifier and the first applicable condition information, a second applicable condition of the AI model; the second applicable condition comprising at least one of the following: channel condition; scenario condition; movement speed condition; and serving cell range or cell list condition.

19. The method for monitoring CSI prediction performance according to claim 18, wherein the first applicable condition information is carried in model configuration information from the network-side device.

20. The method for monitoring CSI prediction performance according to any one of claims 12 to 17, wherein the method further comprises:

determining, by the terminal based on the monitoring metric value, a second applicable condition of the AI model;
transmitting, by the terminal, the AI model identifier and second applicable condition information to the network-side device, the second applicable condition information being used to indicate the second applicable condition; and
receiving, by the terminal, the AI model identifier and first applicable condition information from the network-side device, the first applicable condition information being used to indicate a first applicable condition.

21. The method for monitoring CSI prediction performance according to claim 20, wherein the first applicable condition or the second applicable condition comprises at least one of the following:
channel condition; scenario condition; movement speed condition; and serving cell range or cell list condition.

22. The method for monitoring CSI prediction performance according to any one of claims 18 to 21, wherein the receiving, by the terminal, the AI model identifier and the first applicable condition information from the network-side device comprises:

receiving, by the terminal, the AI model identifier and the first applicable condition information transmitted by the network-side device based on a first manner;
wherein the first manner comprises at least one of the following information or signaling:

MAC CE;
RRC message;
NAS message;
management orchestration message;
user plane data;
DCI information;
SIB;
PDCCH layer 1 signaling;
information carried on PDSCH;
MSG 2 information of PRACH;
MSG 4 information of PRACH; and
MSG B information of PRACH.

23. The method for monitoring CSI prediction performance according to claim 20 or 21, wherein the transmitting, by the terminal, the AI model identifier and second applicable condition information to the network-side device comprises:
transmitting, by the terminal, the AI model identifier and terminal capability information to the network-side device; the terminal capability information comprising the second applicable condition information.

24. The method for monitoring CSI prediction performance according to claim 20 or 21, wherein the transmitting, by the terminal, the AI model identifier and second applicable condition information to the network-side device comprises:

transmitting, by the terminal, the AI model identifier and the second applicable condition information to the network-side device based on a second manner; wherein
the second manner comprises at least one of the following information or signaling:

PUCCH layer 1 signaling;
MSG 1 information of PRACH;
MSG 3 information of PRACH;
MSG A information of PRACH; and
information of PUSCH.

25. A method for monitoring channel state information CSI prediction performance, comprising:

transmitting, by a network-side device, monitoring configuration information to a terminal; wherein the monitoring configuration information is used to acquire first channel information corresponding to CSI prediction channel information; the CSI prediction channel information is prediction information output by an artificial intelligence AI model for CSI prediction, and the first channel information is used for determining the CSI prediction performance of the AI model; wherein
the monitoring configuration information comprises at least one of the following:

information about at least one AI model identifier, the AI model identifier being used to indicate the AI model;
monitoring window-related information, used to indicate a monitoring window for monitoring AI-based CSI prediction performance;
monitoring trigger-related information, used to indicate a condition for triggering AI-based CSI prediction performance monitoring; and
monitoring CSI-RS configuration information, used for measuring CSI-RS configuration information of the first channel information.

26. The method for monitoring CSI prediction performance according to claim 25, wherein the transmitting, by the network-side device, monitoring configuration information to a terminal comprises:

transmitting, by the network-side device, the monitoring configuration information to the terminal based on a first manner; wherein
the first manner comprises at least one of the following information or signaling:

media access control MAC control element CE;
radio resource control RRC message;
non-access stratum NAS message;
management orchestration message;
user plane data;
downlink control information DCI;
system information block SIB;
physical downlink control channel PDCCH layer 1 signaling;
information carried on physical downlink shared channel PDSCH;
MSG 2 information of physical random access channel PRACH;
MSG 4 information of PRACH; and
MSG B information of PRACH.

27. The method for monitoring CSI prediction performance according to claim 25 or 26, wherein the information about an AI model identifier comprises at least one of the following:
AI functionality identifier ID; AI model ID; AI model physical ID; AI model logical ID; AI model global ID; and AI model local ID.

28. The method for monitoring CSI prediction performance according to any one of claims 25 to 27, wherein the monitoring window-related information comprises at least one of the following:

duration of monitoring;
number of monitoring samples; and
time-domain interval between monitoring samples.

29. The method for monitoring CSI prediction performance according to any one of claims 25 to 27, wherein the monitoring trigger-related information comprises at least one of the following:

a periodicity value for periodic triggering; and
first event description information for event triggering, comprising any one of speed change threshold, signal to noise ratio SNR change threshold, wireless environment identification change event, and communication system performance threshold.

30. The method for monitoring CSI prediction performance according to any one of claims 25 to 29, wherein the method further comprises:
transmitting, by the network-side device, reporting information to the terminal, the reporting information being used to indicate configuration information related to reporting.

31. The method for monitoring CSI prediction performance according to claim 30, wherein the reporting information comprises at least one of the following:

trigger information for reporting of a monitoring result, comprising a periodicity value for periodic reporting or second event description information for event-triggered reporting;
report content, comprising a monitoring metric value or the first channel information;
resource information for carrying report content, used to carry the report content; and
a report content format, comprising: format information of a monitoring metric value or format information of the first channel information.

32. The method for monitoring CSI prediction performance according to claim 30 or 31, wherein the method further comprises at least one of the following:

receiving, by the network-side device, both the CSI prediction channel information and the first channel information reported by the terminal based on the reporting information; and
receiving, by the network-side device after receiving the CSI prediction channel information transmitted by the terminal, the first channel information transmitted by the terminal at a next CSI receiving occasion or an N-th CSI receiving occasion based on the reporting information, wherein the first channel information carries label information, the label information being used for determining the CSI prediction channel information corresponding to the first channel information, and N is an integer greater than 1.

33. The method for monitoring CSI prediction performance according to claim 32, wherein the label information comprises at least one of the following:

channel information attribute information, used to indicate that the first channel information is true CSI channel information; and
a lag value of a CSI reporting occasion, used to characterize a time gap between a CSI reporting occasion for the first channel information and a CSI reporting occasion for the CSI prediction channel information.

34. The method for monitoring CSI prediction performance according to claim 32 or 33, wherein the CSI prediction channel information or the first channel information is reported by the terminal to the network-side device based on uplink control information UCI.

35. The method for monitoring CSI prediction performance according to any one of claims 30 to 34, wherein the method further comprises:
receiving, by the network-side device, a monitoring metric value transmitted by the terminal based on the reporting information, the monitoring metric value being used to characterize the CSI prediction performance of the AI model.

36. The method for monitoring CSI prediction performance according to claim 31 or 35, wherein the monitoring metric value comprises at least one of the following:

first information, used to characterize error information between the CSI prediction channel information and the first channel information;

a quantitative scoring metric corresponding to the first information;

second information, used to characterize an average value of accuracy information between the CSI prediction channel information and the first channel information;

a quantitative scoring metric corresponding to the second information;

third information, used to characterize communication system performance;

a quantitative scoring metric corresponding to the third information;

fourth information, used to characterize a maximum or minimum value of a first metric between the CSI prediction channel information and the first channel information within the monitoring window; and

fifth information, used to characterize a number of times that a single measurement result or an average of multiple measurement results of a first metric between the CSI prediction channel information and the first channel information within the monitoring window exceeds or falls below a given threshold; wherein

the first metric comprises at least one of the following: error, modulus of error, squared modulus of error, norm of error, accuracy, similarity, cosine similarity, correlation, and correlation coefficient.

37. The method for monitoring CSI prediction performance according to claim 36, wherein the first information comprises at least one of the following: mean error; mean square error; normalized mean square error; mean absolute error; cross-entropy loss; and root mean square error.

38. The method for monitoring CSI prediction performance according to claim 36, wherein the second information comprises at least one of the following: accuracy; similarity; cosine similarity; correlation; and correlation coefficient.

39. The method for monitoring CSI prediction performance according to claim 36, wherein the third information comprises at least one of the following:

throughput; spectrum efficiency; signal-to-interference-plus-noise ratio SINR; SNR; bit error rate; block error rate; packet loss rate; transmission rate; and peak rate.

40. The method for monitoring CSI prediction performance according to any one of claims 35 to 39, wherein the receiving, by the network-side device, a monitoring metric value transmitted by the terminal comprises:

receiving, by the network-side device, the monitoring metric value transmitted by the terminal based on a second manner; wherein

the second manner comprises at least one of the following information or signaling:

physical uplink control channel PUCCH layer 1 signaling;

MSG 1 information of PRACH;

MSG 3 information of PRACH;

MSG A information of PRACH; and

information of physical uplink shared channel PUSCH.

41. The method for monitoring CSI prediction performance according to any one of claims 35 to 40, wherein the method further comprises:

transmitting, by the network-side device, the AI model identifier and first applicable condition information to the terminal, the first applicable condition information being used for the terminal to configure or update a second applicable condition of the AI model; wherein

the second applicable condition comprises at least one of the following: channel condition; scenario condition; movement speed condition; and serving cell range or cell list condition.

42. The method for monitoring CSI prediction performance according to claim 41, wherein the first applicable condition information is carried in model configuration information transmitted by the network-side device to the terminal.

43. The method for monitoring CSI prediction performance according to any one of claims 35 to 40, wherein the method further comprises:

receiving, by the network-side device, the AI model identifier and second applicable condition information from the terminal, the second applicable condition information being used to indicate second applicable conditions;

and

transmitting, by the network-side device, the AI model identifier and first applicable condition information to the terminal, the first applicable condition information being used to indicate a first applicable condition.

44. The method for monitoring CSI prediction performance according to claim 43, wherein the first applicable condition or the second applicable condition comprises at least one of the following:
channel condition; scenario condition; movement speed condition; and serving cell range or cell list condition.

45. The method for monitoring CSI prediction performance according to claim 41 or 42, wherein the transmitting, by the network-side device, the AI model identifier and the first applicable condition information to the terminal comprises:

transmitting, by the network-side device, the AI model identifier and the first applicable condition information to the terminal based on a first manner; wherein
the first manner comprises at least one of the following information or signaling:

MAC CE;
RRC message;
NAS message;
management orchestration message;
user plane data;
DCI information;
SIB;
PDCCH layer 1 signaling;
information carried on PDSCH;
MSG 2 information of PRACH;
MSG 4 information of PRACH; and
MSG B information of PRACH.

46. The method for monitoring CSI prediction performance according to claim 43, wherein the receiving, by the network-side device, the AI model identifier and the second applicable condition information from the terminal comprises:
receiving, by the network-side device, the AI model identifier and terminal capability information from the terminal, the terminal capability information comprising the second applicable condition information.

47. The method for monitoring CSI prediction performance according to claim 43, wherein the receiving, by the network-side device, the AI model identifier and the second applicable condition information from the terminal comprises:

receiving, by the network-side device, the AI model identifier and the second applicable condition information transmitted by the terminal based on a second manner, wherein
the second manner comprises at least one of the following information or signaling:

PUCCH layer 1 signaling;
MSG 1 information of PRACH;
MSG 3 information of PRACH;
MSG A information of PRACH; and
information of PUSCH.

48. An apparatus for monitoring channel state information CSI prediction performance, comprising:

an acquisition module configured to acquire, based on monitoring configuration information, first channel information corresponding to CSI prediction channel information, wherein the CSI prediction channel information is prediction information output by an AI model for CSI prediction, and the first channel information is used for determining the CSI prediction performance of the AI model; wherein
the monitoring configuration information comprises at least one of the following:

information about at least one artificial intelligence AI model identifier, the AI model identifier being used to indicate the AI model;
monitoring window-related information, used to indicate a monitoring window for monitoring AI-based CSI prediction performance;

monitoring trigger-related information, used to indicate a condition for triggering AI-based CSI prediction performance monitoring; and

monitoring CSI-RS configuration information, used for measuring CSI-RS configuration information of the first channel information.

49. An apparatus for monitoring channel state information CSI prediction performance, comprising:

a first transmitting module configured to transmit monitoring configuration information to a terminal, wherein the monitoring configuration information is used to acquire first channel information corresponding to CSI prediction channel information; the CSI prediction channel information is prediction information output by an AI model for CSI prediction, and the first channel information is used for determining the CSI prediction performance of the AI model; wherein

the monitoring configuration information comprises at least one of the following:

information about at least one artificial intelligence AI model identifier, the AI model identifier being used to indicate the AI model;

monitoring window-related information, used to indicate a monitoring window for monitoring AI-based CSI prediction performance;

monitoring trigger-related information, used to indicate a condition for triggering AI-based CSI prediction performance monitoring; and

monitoring CSI-RS configuration information, used for measuring CSI-RS configuration information of the first channel information.

50. A terminal, comprising a processor and a memory, wherein the memory stores a program or instruction capable of running on the processor, and when the program or instruction is executed by the processor, the steps of the method for monitoring channel state information CSI prediction performance according to any one of claims 1 to 24 are implemented.

51. A network-side device, comprising a processor and a memory, wherein the memory stores a program or instruction capable of running on the processor, and when the program or instruction is executed by the processor, the steps of the method for monitoring channel state information CSI prediction performance according to any one of claims 25 to 47 are implemented.

52. A readable storage medium, where a program or instruction is stored on the readable storage medium, and when the programs or instruction is executed by a processor, the steps of the method for monitoring channel state information CSI prediction performance according to any one of claims 1 to 24 are implemented, or the steps of the method for monitoring channel state information CSI prediction performance according to any one of claims 25 to 47 are implemented.

FIG. 1

FIG. 2

FIG. 3

Multiple historical channel state
information measurements

Predict multiple future channel
state information instances

FIG. 4

FIG. 5

A terminal acquires, based on monitoring configuration information, first channel information corresponding to channel state information prediction channel information, where the channel state information prediction channel information is prediction information output by an artificial intelligence model for channel state information prediction, and the first channel information is used for determining the channel state information prediction performance of the artificial intelligence model; where the monitoring configuration information includes at least one of the following: information about at least one artificial intelligence model identifier, the artificial intelligence model identifier being used to indicate the artificial intelligence model; monitoring window–related information, used to indicate a monitoring window for monitoring artificial intelligence-based channel state information prediction performance; monitoring trigger–related information, used to indicate a condition for triggering artificial intelligence-based channel state information prediction performance monitoring; and monitoring channel state information reference signal configuration information, used for measuring channel state information reference signal configuration information of the first channel information

601

FIG. 6

A network-side device transmits monitoring configuration information to a terminal, where the monitoring configuration information is used to acquire first channel information corresponding to channel state information prediction channel information, the channel state information prediction channel information is prediction information output by an artificial intelligence model for channel state information prediction, and the first channel information is used for determining the channel state information prediction performance of the artificial intelligence model; where the monitoring configuration information includes at least one of the following: information about at least one artificial intelligence model identifier, the artificial intelligence model identifier being used to indicate the artificial intelligence model; monitoring window–related information, used to indicate a monitoring window for monitoring artificial intelligence-based channel state information prediction performance; monitoring trigger–related information, used to indicate a condition for triggering artificial intelligence-based channel state information prediction performance monitoring; and monitoring channel state information reference signal configuration information, used for measuring channel state information reference signal configuration information of the first channel information

701

FIG. 7

Network-side device | Terminal

801. transmit channel state information prediction monitoring configuration information

802. acquire ground-truth channel state information channel information

803. report the ground-truth channel state information channel information

804. calculate a channel state information prediction monitoring result

FIG. 8

Network-side device | Terminal

901. transmit channel state information prediction monitoring configuration information

902. acquire ground-truth channel state information channel information

903. calculate a channel state information prediction monitoring result

904. report the channel state information prediction monitoring result

FIG. 9

1000

Apparatus for monitoring channel state
information prediction performance

Acquisition module — 1001

FIG. 10

1100

Apparatus for monitoring channel state
information prediction performance

First transmitting module — 1101

FIG. 11

1200

Communication device

1201 — Processor ⟺ Memory — 1202

FIG. 12

1300

Terminal

1301 — Radio frequency unit

Network module — 1302

1310

Memory

1309 — Application program

Operating system

Processor

Audio output unit — 1303

1304

Input unit

Graphics processing unit — 13041

Microphone — 13042

1308 — Interface unit

1307

User input unit

13071 — Touch panel

13072 — Other input devices

1306

Display unit

Display panel — 13061

Sensor — 1305

FIG. 13

FIG. 14

## INTERNATIONAL SEARCH REPORT

| International application No. |
|---|
| **PCT/CN2024/085589** |

| **A.** | **CLASSIFICATION OF SUBJECT MATTER** |
|---|---|

H04W24/08(2009.01)i; G06N20/00(2019.01)i

According to International Patent Classification (IPC) or to both national classification and IPC

| **B.** | **FIELDS SEARCHED** |
|---|---|

Minimum documentation searched (classification system followed by classification symbols)

IPC:H04W G06N

Documentation searched other than minimum documentation to the extent that such documents are included in the fields searched

Electronic data base consulted during the international search (name of data base and, where practicable, search terms used)

3GPP, CNTXT, ENTXT, ENTXTC, VEN: 信道状态信息, 人工智能, 机器学习, 预测, 评估, 监控, 监测, 实测, 实际, 真实, 测量, 模型, 标识, 触发, 变化, 改变, 场景, 速度, 环境, 性能, 条件, 报告, 上报, Channel State Information, CSI, Artificial Intelligence, AI, Machine Learning, ML, predict, evaluate, monitor, real, measure, model, ID, identifier, trigger, change, scene, speed, environment, performance, condition, report

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | WO 2023012999 A1 (NTT DOCOMO INC.) 09 February 2023 (2023-02-09) description, paragraphs 17 and 213-264 | 1-3, 5, 7-17, 25-26, 28, 30-40, 48-52 |
| Y | WO 2023012999 A1 (NTT DOCOMO INC.) 09 February 2023 (2023-02-09) description, paragraphs 17 and 213-264 | 1, 4, 6, 18-19, 22, 25, 27, 29, 41-42, 45, 48-49 |
| Y | WO 2022255918 A1 (TELEFONAKTIEBOLAGET LM ERICSSON (PUBL)) 08 December 2022 (2022-12-08) description, paragraphs 97-171 | 1, 4, 6, 25, 27, 29, 48-49 |
| Y | US 2022021470 A1 (TELEFONAKTIEBOLAGET LM ERICSSON (PUBL)) 20 January 2022 (2022-01-20) description, paragraphs 80-112 | 1, 4, 6, 25, 27, 29, 48-49 |
| Y | WO 2023040885 A1 (VIVO MOBILE COMMUNICATION CO., LTD.) 23 March 2023 (2023-03-23) description, paragraphs 48-133 | 18-19, 22, 41-42, 45 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 May 2024** | **19 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/085589** |

**C.    DOCUMENTS CONSIDERED TO BE RELEVANT**

| Category* | Citation of document, with indication, where appropriate, of the relevant passages | Relevant to claim No. |
| --- | --- | --- |
| X | US 2021376895 A1 (QUALCOMM INC.) 02 December 2021 (2021-12-02) description, paragraphs 23-78 | 1-3, 5, 7-17, 25-26, 28, 30-40, 48-52 |
| X | US 2022271851 A1 (NOKIA TECHNOLOGIES OY) 25 August 2022 (2022-08-25) description, paragraphs 10 and 38-44 | 1-3, 5, 7-17, 25-26, 28, 30-40, 48-52 |
| X | WO 2023012997 A1 (NTT DOCOMO INC.) 09 February 2023 (2023-02-09) description, paragraphs 103-112, 213-229 and 233-264 | 1-3, 5, 7-17, 25-26, 28, 30-40, 48-52 |
| A | FUTUREWEI. "Discussion on evaluation of AI/ML for CSI feedback enhancement use case" *3GPP TSG RAN WG1 Meeting #109-e, R1-2203068*, 29 April 2022 (2022-04-29), entire document | 1-52 |

Form PCT/ISA/210 (second sheet) (July 2022)

INTERNATIONAL SEARCH REPORT
Information on patent family members

International application No.

**PCT/CN2024/085589**

| Patent document cited in search report | | | Publication date (day/month/year) | Patent family member(s) | | | Publication date (day/month/year) |
|---|---|---|---|---|---|---|---|
| WO | 2023012999 | A1 | 09 February 2023 | CN | 117751609 | A | 22 March 2024 |
| WO | 2022255918 | A1 | 08 December 2022 | EP | 4349065 | A1 | 10 April 2024 |
| | | | | CN | 117441372 | A | 23 January 2024 |
| US | 2022021470 | A1 | 20 January 2022 | EP | 3895466 | A1 | 20 October 2021 |
| | | | | WO | 2020121045 | A1 | 18 June 2020 |
| WO | 2023040885 | A1 | 23 March 2023 | CN | 115843054 | A | 24 March 2023 |
| US | 2021376895 | A1 | 02 December 2021 | US | 11483042 | B2 | 25 October 2022 |
| | | | | WO | 2021242393 | A1 | 02 December 2021 |
| | | | | EP | 4158810 | A1 | 05 April 2023 |
| | | | | IN | 202227054479 | A | 06 January 2023 |
| | | | | CN | 116210181 | A | 02 June 2023 |
| US | 2022271851 | A1 | 25 August 2022 | EP | 4275291 | A1 | 15 November 2023 |
| | | | | WO | 2022175084 | A1 | 25 August 2022 |
| | | | | US | 11949465 | B2 | 02 April 2024 |
| WO | 2023012997 | A1 | 09 February 2023 | None | | | |

**EP 4 694 294 A1**

**Patent documents cited in the description**

- CN 202310370580